(19) **Europäisches Patentamt / European Patent Office / Office européen des brevets**

(11) **EP 2 593 840 B1**

(12) # FASCICULE DE BREVET EUROPEEN

(45) Date de publication et mention de la délivrance du brevet:
**15.11.2017 Bulletin 2017/46**

(21) Numéro de dépôt: **11739016.1**

(22) Date de dépôt: **12.07.2011**

(51) Int Cl.:
*G04D 7/00* *(2006.01)*    *G04D 7/08* *(2006.01)*

(86) Numéro de dépôt international:
**PCT/EP2011/061851**

(87) Numéro de publication internationale:
**WO 2012/007460 (19.01.2012 Gazette 2012/03)**

(54) **PROCEDE D'AJUSTEMENT DE FREQUENCE D'OSCILLATION OU D'INERTIE, ET D'EQUILIBRAGE D'UN ENSEMBLE BALANCIER-SPIRAL D'HORLOGERIE**

VERFAHREN ZUR EINSTELLUNG DER SCHWINGUNGSFREQUENZ ODER TRÄGHEIT, UND UNRUH EINER UNRUH-FEDERANORDNUNG EINER UHR

METHOD FOR ADJUSTING THE OSCILLATION FREQUENCY OR THE INERTIA, AND THE BALANCE OF BALANCE AND SPRING ASSEMBLY OF A TIMEPIECE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2011 CH 548112011**
**16.07.2010 CH 11922010**
**16.07.2010 CH 11942010**
**16.07.2010 CH 11932010**

(43) Date de publication de la demande:
**22.05.2013 Bulletin 2013/21**

(60) Demande divisionnaire:
**14173409.5 / 2 796 944**

(73) Titulaire: **ETA SA Manufacture Horlogère Suisse 2540 Grenchen (CH)**

(72) Inventeurs:
• **KLINGER, Laurent**
**CH-2503 Bienne (CH)**

• **KRAMER, Thorsten**
**CH-4571 Lüterkofen (CH)**
• **LIPPUNER, Marc**
**2544 Bettlach (CH)**
• **CONUS, Thierry**
**CH-2543 Lengnau (CH)**
• **VERARDO, Marco**
**CH-2336 Les Bois (CH)**

(74) Mandataire: **Giraud, Eric**
**ICB**
**Ingénieurs Conseils en Brevets SA**
**Faubourg de l'Hôpital 3**
**2001 Neuchâtel (CH)**

(56) Documents cités:
**EP-A1- 1 172 714    EP-A1- 1 213 628**
**CH-A- 526 097    FR-A- 1 589 411**

EP 2 593 840 B1

**Description**

<u>Domaine de l'invention</u>

L'invention concerne un procédé d'ajustement de fréquence d'oscillation, ou d'ajustement d'inertie, et d'équilibrage d'un ensemble balancier-spiral d'horlogerie.

L'invention concerne encore un ensemble balancier-spiral d'horlogerie sans raquetterie agencé pour la mise en oeuvre de ce procédé pour l'ajustement de sa fréquence d'oscillation.

L'invention concerne encore un dispositif de mise en oeuvre de ce procédé.

L'invention concerne le domaine de la micromécanique, et plus particulièrement le domaine de l'horlogerie.

Tout particulièrement l'invention concerne les ajustements et réglages d'organes réglants, et en particulier des ensembles balancier-spiral de montres ou de pièces d'horlogerie.

<u>Arrière-plan de l'invention</u>

Malgré l'extrême précision des usinages et leur grande reproductibilité, des ajustements doivent presque toujours être opérés, soit lors d'une opération d'assemblage, soit, plus fréquemment, lors d'une opération de réglage ou de mise au point, en particulier pour ajustement en fréquence, un réglage de balourd et un ajustement d'inertie dans le cas des pièces mobiles.

C'est en particulier au stade assemblé qu'il est nécessaire de parfaire l'appairage de certains composants qui, pris indépendamment, sont dans les tolérances d'usinage ou de réalisation, mais qui ne peuvent être assemblés purement et simplement en raison des contraintes de service propre à l'ensemble monté.

C'est en particulier le cas des organes réglants des pièces d'horlogerie, et tout particulièrement des ensembles balancier-spiral. Il apparaît en effet que les réglages de balourd et d'ajustement d'inertie, tant statique que dynamique, sont déjà très délicats au stade des composants individuels, et que ces opérations de mise au point se révèlent extrêmement complexes quand les composants sont assemblés entre eux. En particulier les réglages dynamiques se révèlent délicats à mettre en oeuvre, notamment l'ajustement en fréquence.

La situation est encore plus complexe quand un tel ensemble est déjà intégré à un ensemble supérieur, comme un mouvement de montre par exemple, en raison de la moindre accessibilité, mais aussi de la perturbation du bon fonctionnement du mouvement, induite par l'exécution d'une opération d'ajustement, de réglage ou d'équilibrage.

La difficulté est donc double, car il s'agit de pouvoir dominer des réglages et des ajustements dynamiques sur des composants qui sont :

- en mouvement, ou
- intégrés dans un mouvement d'horlogerie, ou
- en mouvement et intégrés dans un mouvement d'horlogerie.

La problématique de l'équilibrage dynamique reste le domaine, dans l'industrie, d'un nombre extrêmement restreint de spécialistes, ce que l'on peut vérifier en constatant la faiblesse de l'offre, au niveau mondial, de machines d'équilibrage industrielles. Le domaine micromécanique ne fait qu'amplifier ce phénomène, car les pièces à équilibrer sont de très faible masse, de l'ordre du gramme ou du décigramme, et les tolérances d'inertie sont de l'ordre du microgramme x centimètre carré. Ce qui n'a rien à voir avec le domaine d'emploi des équilibreuses pour roues de véhicules automobiles, les plus nombreuses, ou les machines dédiées à l'industrie lourde, au ferroviaire, ou à des process à grande vitesse.

Longtemps la problématique de l'équilibrage dynamique a suscité des solutions consistant à localiser des zones d'ajout ou d'enlèvement de matière, et à quantifier ces ajouts ou enlèvements, qui sont effectués après l'arrêt de la rotation de l'organe mobile à équilibrer, comme dans le document de brevet US 2 538 528 au nom de Kohlhagen. Dans une variante, comme dans le document de brevet DE 1 142 796 au nom de Hettich, des masses sont à positionner ou au contraire à chasser au niveau de trous pré-percés sur toute la circonférence d'un balancier de montre. Le brevet CH 367 444 au nom de OMEGA montre les inconvénients de l'enlèvement traditionnel par fraisage sur les balanciers de montres, et propose une solution d'ajout ou d'enlèvement de matière par voie électrochimique, ce qui permet d'assurer la correction de la masse et la précision de l'équilibrage.

Le brevet US 3 225 586 au nom de HAMILTON propose l'utilisation du microphone d'un appareil de type « Watchmaster », lié à l'équipage mobile dans sa rotation, pour déterminer très exactement l'ajustement de 4 vis en périphérie de la serge du balancier.

Pour améliorer ces procédés en deux étapes, mesure puis ajustement, un brevet CH 390 165 au nom de Zenger propose un procédé d'équilibrage par électroérosion, en continu avec un très léger différé après une mesure stroboscopique, mais il nécessite une rotation dans un sens uniforme de ce balancier.

Le brevet CH 690 874 au nom de Witschi décrit encore un procédé d'enlèvement ou d'apport de matière suite à une mesure préalable, avec un dispositif d'arrêt du balancier pour le maintenir face à des moyens d'enlèvement ou d'apport.

Le brevet CH 526 097 au nom de la Compagnie Générale d'Electricité propose un équilibrage d'une pièce tournante ou oscillante par rayon laser parallèle à l'axe de pivotement de la pièce à équilibrer, comportant un dispositif optique de déviation du faisceau laser de façon à ce que celui-ci soit synchrone avec la pièce en mouvement, et à ainsi vaporiser la matière à l'endroit adéquat pendant toute la durée de l'impulsion émise par le laser. Cette technologie représente un progrès important par rapport à l'art antérieur, mais n'est pas bien adaptée à un composant monté dans un ensemble, en raison des déchets et de la pollution de l'ensemble.

Il en est de même d'un brevet FR 2 159 367 au nom de Les Fabriques d'Assortiments Réunies, qui propose un procédé par usinage avec minimisation du nombre d'opérations, mais où la position de la tête d'usinage dépend du défaut à corriger, ce qui n'est pas possible dans un ensemble monté.

En somme, les procédés connus capables d'effectuer une correction d'inertie, ou d'équilibrage, ou d'une autre grandeur physique telle que la raideur d'un ressort, sur une pièce en mouvement sont rares et mal adaptés pour effectuer cette correction sur cette même pièce montée dans un ensemble. De plus, peu conviennent à un mouvement alternatif, qui est celui d'un balancier ou d'un ensemble balancier-spiral monté.

La demande de brevet EP 1 172 714 A1 au nom de SEIKO décrit une méthode d'ajustement de fréquence d'oscillation d'un balancier-spiral, avec ajout ou enlèvement de matière au niveau du balancier.

La demande de brevet EP 1213 628 A1 ou US 6 534 742 au nom de ETA SA Fabrique d'Ebauches propose une méthode d'ajustement de la fréquence d'oscillation d'un balancier-spiral, par la mise en oeuvre d'un laser agissant sur le ressort-spiral pour réduire son couple élastique, en réduisant son épaisseur ou sa hauteur. Tout en représentant un progrès manifeste par rapport à l'art antérieur, cet enseignement ne résout pas tous les cas de figure, car il ne peut créer que du retard en affaiblissant le ressort. D'autre part il ne peut être utilisé qu'en-dehors du mouvement d'horlogerie, en raison de la pollution et des déchets générés par l'action du laser.

Résumé de l'invention

L'invention se propose de fournir une solution à ce problème, par la mise au point d'un procédé convenant aux réglages et ajustements dynamiques de composants d'horlogerie, et en particulier de composants mobiles en pivotement dans des ensembles montés, tout particulièrement pour effectuer des réglages d'ajustement de fréquence d'oscillation, ou d'ajustement d'inertie, et d'équilibrage d'un ensemble balancier-spiral d'horlogerie.

Un des buts particuliers de l'invention est de supprimer la raquetterie sur les ensembles-réglants du type balancier-spiral.

En particulier l'invention s'applique à proposer une méthode efficace, rapide et précise pour ces réglages d'ajustement de fréquence d'oscillation, réglages d'inertie, réglages d'équilibrage dynamique, ou encore les réglages d'ajustement de ressorts spiraux, ou similaires, qui soit applicable avec les composants montés dans l'ensemble supérieur, notamment dans un mouvement d'horlogerie, et encore qui soit applicable quand ces composants sont eux-mêmes en mouvement.

L'invention se propose d'améliorer cet état de faits en proposant une solution à ce problème, par la mise au point d'un procédé convenant aux réglages et aux ajustements dynamiques sur des composants qui sont :

- en mouvement, ou
- intégrés dans un mouvement d'horlogerie, ou
- en mouvement et intégrés dans un mouvement d'horlogerie.

A cet effet, l'invention concerne un procédé d'ajustement de fréquence d'oscillation ou d'ajustement d'inertie, et d'équilibrage d'un ensemble balancier-spiral d'horlogerie, selon la revendication 1.

L'invention concerne encore un ensemble balancier-spiral d'horlogerie sans raquetterie agencé pour la mise en oeuvre de ce procédé pour l'ajustement de sa fréquence d'oscillation, selon la revendication 24

L'invention concerne encore un dispositif de mise en oeuvre de ce procédé, selon la revendication 25.

Description sommaire des dessins

D'autres caractéristiques et avantages de l'invention apparaîtront à la lecture de la description détaillée qui va suivre, en référence aux dessins annexés, où :

- la figure 1 représente un graphe avec, en ordonnée, la valeur algébrique de la position du centre de masse de la matière enlevée lors d'une opération de micro-usinage par ablation sous un faisceau de picolaser, en fonction de l'amplitude de la position angulaire d'un balancier d'horlogerie ;
- la figure 2 représente, de façon schématisée, un dispositif de mise en oeuvre de l'invention ;
- la figure 3 représente, de façon schématisée et partielle, l'intervention simultanée de deux picolasers en micro-usinage sur un ensemble balancier-spiral réduit sur la figure à son seul balancier ;
- la figure 4 représente, de façon analogue à la figure 3, l'intervention différée de deux tels picolasers ;
- la figure 5 représente, de façon analogue à la figure 3, l'intervention d'un seul tel picolaser.

Description détaillée des modes de réalisation préférés

L'invention concerne un procédé d'ajustement de fréquence d'oscillation, ou/et d'ajustement d'inertie, ou/et d'équilibrage d'un ensemble balancier-spiral d'horlogerie, notamment par micro-usinage ou/et ajout de matière, ou/et déplacement de matière.

Plus particulièrement ce procédé est appliqué à un balancier-spiral d'horlogerie sans raquetterie.

L'invention concerne encore un dispositif de mise en oeuvre de ce procédé.

L'invention concerne encore un balancier-spiral d'horlogerie sans raquetterie, ajusté en réglage d'oscillation selon ce procédé, et plus particulièrement conçu pour mettre à profit certaines caractéristiques particulières de ce procédé, notamment en cas de déplacement de matière.

L'invention concerne plus particulièrement le domaine de l'horlogerie, et tout particulièrement concerne les ajustements et réglages fins d'organes-réglants, en particulier des ensembles balancier-spiral de montres ou de pièces d'horlogerie.

L'invention concerne un procédé d'ajustement de fréquence d'oscillation, ou d'ajustement d'inertie, et d'équilibrage d'un ensemble balancier-spiral d'horlogerie, caractérisé en ce qu'on effectue un enlèvement de matière ou/et un ajout de matière ou/et un déplacement de matière sur au moins un composant dudit ensemble, par la mise en oeuvre d'au moins un moyen de transformation comportant au moins une source picolaser ou plasma, pour réaliser un micro-usinage ou/et une microfusion de la matière dudit au moins un composant dudit ensemble ou/et une microfusion d'au moins un matériau d'apport, pour vaporiser ou/et sublimer ou/et déplacer ou/et respectivement souder au moins un matériau d'apport sur ledit au moins un composant dudit ensemble, sous l'effet d'au moins une impulsion dudit moyen de transformation, et qu'on commande ladite au moins une impulsion par des moyens de pilotage agencés pour générer, séquencer, interrompre toute impulsion dudit au moins un moyen de transformation, lesdits moyens de pilotage étant encore agencés pour piloter les mouvements d'au moins un faisceau issu dudit moyen de transformation, lesdits moyens de pilotage étant asservis à des moyens de mesure ou de comparaison.

Avantageusement, on choisit comme tel moyen de transformation au moins un picolaser pour effectuer un enlèvement de matière par micro-gravure sous l'effet d'au moins une impulsion de ce picolaser de façon à transformer directement de la matière solide du composant concerné en un flux gazeux par sublimation, et on établit, de part et d'autre de ce composant pendant son traitement par ce picolaser, une différence de pression de façon à évacuer les gaz ou/et déchets liés à la sublimation.

Ce procédé concerne un ajustement sur un ensemble balancier-spiral d'horlogerie comportant au moins un balancier, lequel comporte une serge périphérique, et au moins un ressort-spiral, attachés l'un à l'autre au niveau d'une virole, ledit ensemble balancier-spiral étant mobile en pivotement autour d'un axe de balancier.

Afin de réaliser, sans démontage, des opérations de micro-usinage de façon simultanée avec des opérations de mesure ou de comparaison, il est nécessaire de mettre en oeuvre des moyens d'enlèvement ou/et d'ajout de matière ou/et de déplacement de matière, intervenant rapidement par rapport à un événement commandé par une chaîne de mesure ou de comparaison. Dans un mode particulier de mise en oeuvre de l'invention, ces opérations de micro-usinage ou/et d'ajout de matière ou/et de déplacement de matière peuvent être réalisées en temps réel avec des mesures ou/et des comparaisons, dans le cadre d'un système en boucle fermée. Toutefois le procédé est conçu aussi pour traiter, au moins en léger différé, le résultat de mesures ou comparaisons antérieures. De bons résultats sont obtenus en traitant de façon différée et alternativement, les opérations de mesure et d'ablation, ou/et d'ajout de matière ou/et de déplacement de matière.

Le procédé selon l'invention met avantageusement en oeuvre une combinaison d'ablation et d'ajout de matière, sur les composants constitutifs du balancier-spiral, ou sur les composants que porte ce balancier-spiral, tels que masselottes, vis, ou autre, ou sur ces seuls composants et le spiral, à l'exclusion du balancier.

Dans une alternative innovante de réalisation particulière de l'invention, ce procédé met en oeuvre un déplacement de matière au niveau de ce ou de ces composants.

Dans une variante avantageuse, le déplacement de matière est combiné avec une combinaison d'ablation et d'ajout de matière.

Un des buts de l'invention est de permettre l'élimination de la raquetterie. Les possibilités d'ajustement en fréquence d'oscillation et en réglage d'inertie proposés par l'invention permettent d'atteindre ce but.

Par ablation on entend ici tout enlèvement de matière, réalisé par tout moyen.

L'un des buts de l'invention est de rendre le micro-usinage ou/et l'ajout de matière ou/et le déplacement de matière à la fois très rapide et précis, aussi bien dans sa localisation géographique que dans la quantité de matière enlevée, pour parvenir très rapidement à un résultat définitif, avec une à deux mesures ou comparaisons intermédiaires seulement.

Il s'agit aussi de réaliser un micro-usinage ou/et un micro-ajout de matière ou/et un déplacement de matière parfaitement net et propre, et sans qu'aucun déchet solide ne subsiste.

Selon l'invention, on effectue, ou un enlèvement de matière en transformant au moins une partie de la matière de ce composant ou de cet ensemble balancier-spiral par ablation, notamment au moins partiellement et de préférence le plus complètement possible par sublimation, c'est-à-dire par passage direct de l'état solide à l'état gazeux, sans redéposition de déchets solides ni liquides sur le composant, par la mise en oeuvre d'un moyen de micro-usinage adapté, pour effectuer l'ajustement d'inertie, ou/et d'équilibrage, ou/et de fréquence d'oscillation, ou un ajout de matière, par la mise en oeuvre d'un moyen de projection ou de dépôt adapté, ou/et de déplacement de matière, par modification de la géométrie intrinsèque du composant concerné.

L'ablation de matière par sublimation est le mode préféré de mise en oeuvre de l'invention pour ce qui concerne l'ablation de matière, en effet la sublimation permet de maintenir la propreté de la zone où on effectue l'enlèvement de matière. Mais on comprend qu'une solution intermédiaire, comportant un passage de la phase solide à la phase liquide, éventuellement suivi d'un passage de la phase liquide à la phase gazeuse, permet aussi d'obtenir le résultat recherché, et constitue aussi un mode alternatif de mise en oeuvre de l'invention.

Naturellement, il convient de considérer également le cas de la vaporisation, par exemple si on transforme un métal liquide comme du mercure en gaz, avec les précautions de captation idoines de ces gaz.

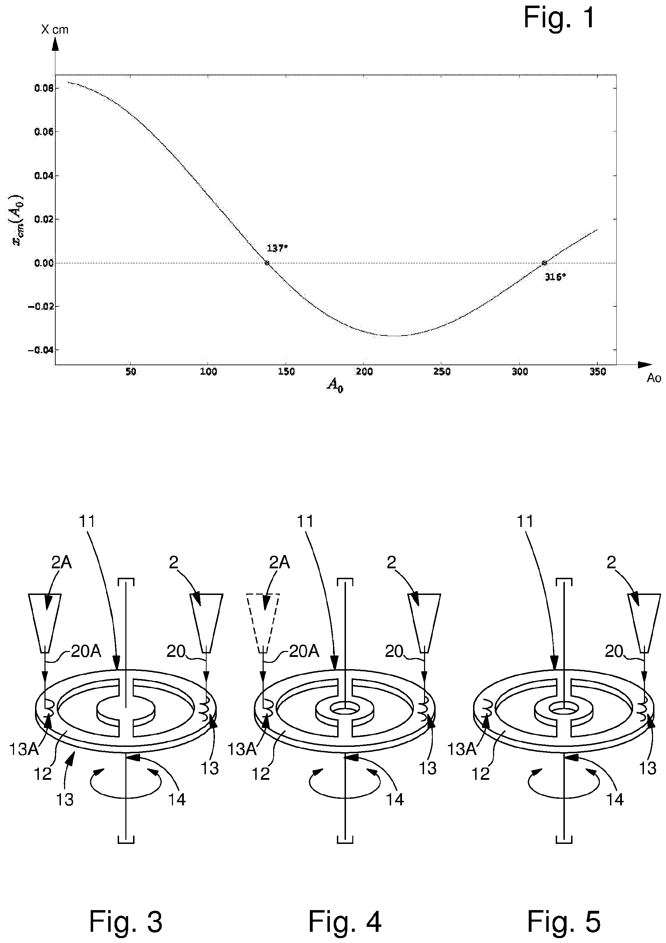

On commande cette impulsion, ou de préférence ces impulsions, par des moyens de pilotage, qui sont agencés pour générer, séquencer, interrompre toute impulsion de ce picolaser ou similaire, ou de ces picolasers quand on en utilise plusieurs, comme sur l'exemple de la figure 3. Ces moyens de pilotage sont encore agencés pour piloter les mouvements d'au moins un faisceau issu de ce picolaser, ou encore le mouvement de la source picolaser elle-même. Naturellement les moyens de pilotage pilotent les mouvements de toutes les sources picolasers utilisées dans la mise en oeuvre du procédé. Ces moyens de pilotage sont interfacés ou raccordés à des moyens de mesure ou de comparaison, ou encore asservis à ces moyens de mesure ou de comparaison.

Le micro-usinage par laser, notamment par picolaser, est particulièrement efficace pour le cas présent des composants mobiles d'horlogerie, surtout lorsqu'ils sont montés dans un mouvement, et lorsqu'ils sont eux-mêmes en mouvement. Des moyens d'ablation alternatifs, comme le bombardement ionique, l'arc électrique, ou autre, peuvent aussi être mis en oeuvre sans s'éloigner de l'invention.

Un échauffement plasma peut permettre d'effectuer des opérations d'ablation, ou aussi d'apport de matière par projection dans un flux gazeux, tel une torche plasma ou similaire, ou soudure micro-plasma, et son coût est très faible.

Dans une autre variante, le dépôt de matière est effectué par la fusion d'un fil, ou similaire, sur une surface du mobile concerné.

Les technologies d'usinage traditionnelles à l'outil coupant ou à la meule sont bien connues de l'homme du métier, et ne sont pas détaillés ici.

Le procédé d'ajout de matière sur composant de pièce d'horlogerie, consiste en ce que on dépose de la matière d'origine externe sur le composant, et en qu'on choisit de préférence comme moyen de dépôt, ou au moins un picolaser, ou une tête de projection pour effectuer cet ajout de matière, et qu'on commande cette impulsion par ces moyens de pilotage agencés pour générer, séquencer, interrompre toute impulsion de ce picolaser, ou de la tête de projection selon le cas.

On choisit les moyens de mesure ou de comparaison et on les agence pour effectuer des mesures au moins d'inertie et de fréquence d'oscillation, sur ce composant aussi bien en position d'arrêt que lors d'un mouvement de ce composant.

L'invention met en oeuvre les conditions pour transformer directement de la matière depuis un état solide vers un état volatil notamment par sublimation, sans pour autant passer par un état liquide de la matière, notamment par sublimation. Un tel micro-usinage est possible grâce à la technologie des lasers athermiques, tels que picolasers ou similaires, qui permet d'envoyer sur une surface un faisceau pendant une impulsion de durée très courte, mais avec une très grande densité d'énergie, ce qui permet de sublimer directement la matière, sans passer par l'état liquide d'une fusion, ou du moins en évitant au maximum le passage par l'état liquide de fusion car il est inévitable que des effets de bord donnent naissance à des microfusions locales, qui sont alors, au niveau du cratère issu de l'impact du faisceau, immédiatement resolidifiées. Cette durée d'impulsion est de l'ordre de la picoseconde, soit $10^{-12}$ seconde dans le cas d'un picolaser, dont la puissance moyenne est compris entre 1 et 10 W, et, dans le cadre de l'invention, on utilise des durées de l'ordre de quelques picosecondes à quelques dizaines ou centaines de picosecondes.

La sublimation offre l'avantage de garantir la propreté parfaite du domaine de travail, ce qui autorise son emploi sur un produit terminé, déjà assemblé. Il suffit de canaliser les gaz, par exemple en créant une différence de pression autour du domaine de travail, notamment dans un flux d'écoulement continu de gaz et d'air, pour recueillir les gaz issus de leur sublimation en vue de leur traitement ou destruction ou évacuation selon leur toxicité.

L'invention consiste alors à créer les conditions d'utilisation d'un tel picolaser athermique afin de rendre l'opération viable économiquement. En effet, on comprend que la quantité de matière sublimée à chaque impulsion est très faible, l'épaisseur enlevée étant micrométrique, ce qui fait que la durée de micro-usinage serait très longue, et prohibitive. Dans le cas d'un balancier-spiral, une succession de points creusés périodiquement à raison de un par alternance nécessiterait une durée de traitement beaucoup trop longue pour être rentable. En utilisant un tel laser picoseconde, dit picolaser, on peut procéder à une ablation de matière sur une serge de balancier, ou encore sur un ou plusieurs composants que porte ce balancier au niveau de cette serge, comme plots, masselottes, vis de réglage, ou analogues. Cette ablation de matière réduit l'inertie de ce balancier, et donc permet de corriger un éventuel défaut de marche.

Un tel traitement est caractérisé par plusieurs paramètres: simplicité de la mise en oeuvre, temps de traitement pour procéder à une correction donnée, création d'un éventuel balourd, nécessité de procéder à certaines mesures, etc.

Le présent document présente une stratégie d'ablation sur un ensemble balancier en mouvement, c'est-à-dire dans son mouvement de pivotement autour de son axe de balancier. L'invention se propose, grâce à la mise en oeuvre de ce procédé nouveau, d'effectuer l'ajustement en fréquence de ce balancier, ou/et son ajustement en inertie, ou/et son ajustement en équilibrage afin de faire coïncider cet axe de pivotement de balancier, ou de ce balancier-spiral, avec son axe principal d'inertie.

La présente invention est développée pour être mise en oeuvre aussi bien au niveau d'un balancier seul, que d'un balancier-spiral assemblé, que d'un balancier-spiral intégré et monté dans un mouvement d'une pièce d'horlogerie.

Cette stratégie a pour effet d'optimiser le temps de traitement et le balourd créé.

De façon avantageuse, on programme les moyens de pilotage de façon à définir au moins une zone particulière de la surface du composant, notamment pour un balancier la serge du balancier, ou de composants que porte ce balancier. Cette zone est celle sur laquelle de la matière doit être enlevée.

Dans le cas d'un balancier-spiral, on met ce procédé en oeuvre pour effectuer l'ajustement de fréquence d'oscillation d'un ensemble balancier-spiral mobile en pivotement autour d'un axe de balancier, et on effectue un enlèvement ou/et un ajout ou/et un déplacement de matière, pour effectuer l'ajustement en fréquence d'oscillation de cet ensemble balancier-spiral, et il comporte un premier processus selon lequel:

- on évalue l'avance ou le retard dudit ensemble balancier-spiral par rapport à une fréquence d'oscillation de consigne ;
- on programme lesdits moyens de pilotage de façon à définir au moins une zone particulière sur laquelle de la matière doit être enlevée ou/et ajoutée ou/et déplacée, selon le cas, dans une première alternative en cas de nécessité de création d'avance ladite zone étant définie au niveau de ladite serge dudit balancier ou de composants ou masselottes ou plots ou vis que porte ledit balancier, ou dans une seconde alternative en cas de nécessité de création de retard ladite zone étant définie au niveau d'au moins une spire dudit ressort-spiral,
- on programme lesdits moyens de pilotage de façon à générer, selon le cas, une avance par une diminution d'inertie par enlèvement de matière sur ledit balancier, ou une avance par modification de la raideur dudit ressort-spiral par ajout de matière sur ledit ressort-spiral ; ou une avance par déplacement de matière au niveau dudit balancier ou dudit ressort-spiral, ou un retard par une augmentation d'inertie par ajout de matière sur ledit balancier, ou un retard par modification de la raideur dudit ressort-spiral par enlèvement de matière sur ledit ressort-spiral, ou un retard par déplacement de matière au niveau dudit balancier ou dudit ressort-spiral.

De préférence on programme les moyens de pilotage pour effectuer un enlèvement de matière, selon le cas sur le balancier ou sur le ressort-spiral, par génération d'au moins une série séquentielle à grande fréquence moyenne d'impulsions du moyen de transformation, notamment un picolaser, de façon à générer, sur cette zone ou sur ces zones selon le cas, au moins une ligne d'impacts successifs du faisceau du picolaser, afin d'y réaliser une micro-gravure par enlèvement localisé de matière, ou/et on programme ces moyens de pilotage pour effectuer un ajout de matière ou/et un déplacement de matière, selon le cas sur le balancier ou le ressort spiral.

Cette ligne d'impacts n'est pas nécessairement droite, ni même continue, en effet, elle dépend des mouvements relatifs du composant et du faisceau du picolaser, ou des faisceaux s'il y en a plusieurs.

On comprend qu'on parle ici de grande fréquence moyenne d'impulsions du picolaser, car il n'est pas indispensable que la fréquence des impulsions soit constante, en particulier la génération des impulsions peut être de type aléatoire, ou suivre une règle particulière de variation.

On crée ainsi avantageusement un effet de balayage, c'est-à-dire qu'on soumet, dans certaines zones du composant, sa surface à une séquence continue d'impulsions du picolaser, se traduisant par le tracé d'un sillon à la surface du composant. Afin de créer cet effet de balayage, de préférence au moins le composant ou la direction du faisceau picolaser est en mouvement pendant cette impulsion du picolaser, et, de fait, on crée les conditions d'une pluralité d'impulsions dans une zone géographique particulière de la surface du composant. Il est préférable de faire effectuer des trajets au faisceau du picolaser, car le spot devrait de préférence se déplacer au moins de la valeur de son rayon entre deux tirs successifs, de façon à ce que le tir ultérieur ne tombe pas dans la bulle de plasma générée par le tir antérieur, même si un tel micro-usinage reste aussi possible.

En effet, il est envisageable d'effectuer un usinage à l'aide d'un picolaser, tel qu'un perçage, sans mouvement relatif entre la pièce usinée et le faisceau du picolaser, soit à l'arrêt, soit en mouvement synchrone, dans un but de propreté notamment sur un composant fini et assemblé, mais il est nécessaire d'éloigner suffisamment les impulsions dans le temps.

Ce premier processus peut, mais non nécessairement, être un premier processus itératif jusqu'à l'atteinte d'une fréquence d'oscillation de consigne dans une tolérance donnée.

On programme les moyens de pilotage de façon à définir au moins une zone particulière de la surface du composant, ou dudit au moins un composant dudit ensemble, sur laquelle de la matière doit être enlevée ou/et ajoutée ou/et déplacée, et on programme les moyens de pilotage de façon à générer au moins une série séquentielle à grande fréquence moyenne d'impulsions du moyen de transformation de façon à générer, sur cette zone, au moins une ligne d'impacts successifs d'un faisceau émis par ce au moins un moyen de transformation.

On programme les moyens de pilotage de façon à définir au moins une zone particulière sur laquelle de la matière doit être enlevée, ou ajoutée, ou déplacée, selon le cas, et de préférence:

- dans une première alternative en cas de nécessité de création d'avance cette zone est définie au niveau de la serge du balancier ou de composants ou masselottes ou plots ou vis que porte ce balancier,
- ou dans une seconde alternative en cas de nécessité de création de retard cette zone est définie au niveau d'au moins une spire du ressort-spiral.

En somme, la programmation des moyens de pilotage est de préférence effectuée de façon à générer, selon le cas :

- une avance par une diminution d'inertie par enlèvement de matière sur le balancier,
- ou un retard par modification de la raideur du ressort-spiral par enlèvement de matière sur le ressort-spiral,
- ou encore un retard par augmentation d'inertie par ajout de matière sur le balancier,
- ou encore une avance par modification de la raideur du ressort spiral par ajout de matière sur le ressort spiral.

Ces avances et ces retards peuvent aussi être obtenus par déplacement de matière, en combinaison ou non avec l'ablation ou/et l'ajout de matière.

On peut ainsi effectuer un ajout de matière, ou encore combiner ablation, déplacement, ajout de matière sur les composants constitutifs du balancier-spiral, ou sur les composants qu'il porte, tels que masselottes, vis, ou autre.

Dans un mode de réalisation préféré, on programme ces moyens de pilotage de façon à permettre l'évacuation de la bulle de plasma du tir antérieur avant tout nouveau tir. On comprend tout l'avantage d'une série séquentielle à grande fréquence moyenne d'impulsions du picolaser, pour générer, sur cette zone, au moins une ligne, ou de préférence plusieurs lignes, d'impacts successifs du faisceau du picolaser.

Ce long trajet compense ainsi la faiblesse de chaque impulsion, et permet d'atteindre, en cumul, un enlèvement de matière suffisant pour effectuer par micro-gravure localisée l'ajustement souhaité.

On comprend que le procédé peut être mis en oeuvre de différentes manières :

- en traitement différé entre des phases de mesure ou/et de comparaison d'une part, et des phases de micro-usinage ou/et d'ajout de matière ou/et de déplacement de matière d'autre part, ou
- en traitement simultané, ou semi-simultané, avec l'exécution de certaines opérations de mesure ou/et de comparaison pendant l'exécution de certaines opérations de micro-usinage ou de micro apport de matière, ou de déplacement de matière.

On comprend encore qu'on parle ici de grande fréquence moyenne d'impulsions du picolaser, car il n'est pas indispensable que la fréquence des impulsions soit constante, en particulier la génération des impulsions peut être de type aléatoire, ou suivre une règle particulière de variation.

Dans un exemple de mise en oeuvre préféré, la fréquence moyenne des tirs laser est comprise entre 50 Hz et 500 kHz, notamment comprise entre 100 kHz et 500 kHz, et notamment de l'ordre de 300 kHz.

Par exemple, dans une opération d'ajustement d'inertie sur un balancier de montre, le nombre d'impulsions générées peut être de l'ordre de $10^5$ à $10^{10}$.

Il est donc nécessaire, pour obtenir cet effet de balayage, qu'au moins le composant ou la direction du faisceau du picolaser soit en mouvement pendant cette série séquentielle d'impulsions du picolaser. Il convient de comprendre que c'est la direction du faisceau du picolaser qui est en mouvement, car la source picolaser elle-même peut rester fixe, et le faisceau peut être orienté, par un jeu de miroirs pilotés par des piézos ou à la façon d'un galvanomètre, vers la zone de la surface qu'il s'agit de micro-usiner.

On comprend qu'il suffit de programmer les moyens de pilotage pour définir autant de zones que nécessaire, et pour générer autant de séries séquentielles d'impulsions que nécessaire.

Dans une application préférée, notamment l'ajustement d'inertie ou/et l'équilibrage d'un ensemble réglant tel que balancier-spiral ou d'un de ses composants, ce composant est en mouvement pendant cette série séquentielle d'impulsions du picolaser. De façon préférée, de façon à augmenter l'efficacité et la rapidité du procédé, la direction du faisceau du picolaser est également en mouvement pendant cette même série séquentielle d'impulsions du picolaser.

Les moyens de pilotage prennent en compte la géométrie et la composition du composant à micro-usiner, et restreignent l'amplitude de la mobilité du faisceau laser, et la génération des impulsions, de façon à ce que le faisceau ne vienne rencontrer que des zones sur lesquelles le micro-usinage est, d'une part possible, et d'autre part souhaité. En particulier, dans l'exemple de l'ajustement d'inertie ou/et de l'équilibrage d'un balancier spiral, les zones pourront être restreintes à la périphérie de la serge du balancier, et en particulier aux zones métalliques qu'il comporte, notamment masselottes, plots, ou vis d'équilibrage, que comporte ce balancier, car le but de la mise en oeuvre du picolaser est de sublimer de la matière métallique, et non d'interagir avec d'autres matériaux dont l'élévation locale de température pourrait donner d'autres effets non désirés et notamment la création de scorie, poussières ou similaires. La définition des zones autorisées est avantageusement faite en coordonnée polaires, avec la définition d'une plage de rayons et d'une plage d'angles au centre.

Diverses possibilités s'offrent, quant à la mise en mouvement de la direction du faisceau du picolaser, plus particulièrement quand le composant à micro-usiner est mobile en pivotement autour d'un axe de pivotement :

- dans une réalisation simple, ce mouvement se fait dans un plan, et on soumet la direction du faisceau du picolaser à un mouvement dans un plan radial par rapport à un axe de pivotement que comporte le composant, pendant cette série séquentielle d'impulsions du picolaser. Par exemple, dans le cas de l'ajustement d'inertie ou/et de l'équilibrage d'un balancier spiral, ce plan est avantageusement choisi parallèle à l'axe de pivotement du balancier, l'image des micro-usinages sur une portion annulaire de la serge, ou, notamment sur des plots dévolus à cet usage, prend alors la forme d'un faisceau de lignes brisées obliques ou radiales, qui résultent de la combinaison des deux mouvements du faisceau et du balancier, et qui se rapprochent de droites si le plan choisi est radial par rapport à l'axe du balancier, et si la vitesse de déplacement du faisceau dans ce plan est très supérieure à la vitesse tangentielle du balancier ;
- dans une réalisation particulière et de mise en oeuvre facile et préférée, on soumet la direction du faisceau du picolaser à un mouvement tel que ce faisceau reste parallèle à l'axe de pivotement du composant ;
- dans une autre réalisation, on soumet la direction du faisceau du picolaser à un mouvement tridimensionnel dans un volume englobant un plan radial par rapport à un axe de pivotement que comporte le composant, pendant cette série séquentielle d'impulsions du picolaser, ce volume étant par exemple inscrit dans un cône de balayage. L'image obtenue est alors plus proche d'un enchevêtrement de boucles ;
- dans une autre encore réalisation, on soumet la direction du faisceau du picolaser à un mouvement tridimensionnel pendant cette série séquentielle d'impulsions du picolaser, ce mouvement tridimensionnel étant comparable à celui d'une machine à commande numérique trois axes, quoique dans la pratique il suffise de piloter angulairement deux miroirs pour atteindre tout point de l'espace. L'image obtenue est également proche d'un enchevêtrement de boucles, mais une programmation particulière prenant en compte les vecteurs -vitesses respectifs du faisceau et du composant peut permettre d'effectuer le micro-usinage selon un canevas déterminé.

On peut ainsi créer une sorte de balayage permanent dans la zone considérée, et enlever ainsi suffisamment de matière.

Naturellement, dans le cas où le composant est fixe, et où seul le faisceau du picolaser est mobile, ce dernier peut également être piloté selon l'un quelconque de ces modes de pilotage décrits ci-dessus.

A ce propos, l'emploi d'un micro-usinage au picolaser permet aussi de graver le composant de façon presque invisible à l'oeil, et d'effectuer certains marquages anti-contrefaçon, par exemple.

De façon préférée, on soumet le composant à un mouvement de pivotement autour d'un axe de pivotement qu'il comporte, pendant chaque série séquentielle d'impulsions du picolaser. Dans le cas d'un organe réglant d'horlogerie, ce mouvement de pivotement est alternatif.

Dans un mode particulier d'exécution de l'invention, on met en oeuvre au moins deux moyens de transformation, notamment picolasers, de mouvements de faisceau symétriques, ou par rapport à un plan passant par l'axe principal d'inertie du composant, ou par rapport à l'axe principal d'inertie du composant. Notamment quand les mouvements de faisceau sont symétriques par rapport à l'axe principal d'inertie, les enlèvements de matière réalisés sont symétriques et on ne crée pas de balourd. Il convient, alors, de synchroniser ces au moins deux picolasers, et de générer un arrêt du micro-usinage si, pour une raison quelconque, un des picolasers cesse d'émettre. Une précaution utile, en cas de travail avec deux picolasers ou davantage, est de les permuter dans les micro-usinages qu'ils réalisent, car les faisceaux ne sont jamais strictement identiques, contrairement à des faisceaux issus de la division d'une seule source.

Le balayage symétrique n'est pas nécessairement pair, il est par exemple possible d'effectuer des balayages dans trois plans passant par l'axe principal d'inertie du composant et à 120° les uns des autres.

La durée d'impulsion est de l'ordre de la picoseconde, soit $10^{-12}$ seconde dans le cas d'un picolaser, dont la puissance moyenne est comprise entre 1 et 10 W, et, dans le cadre de l'invention, on utilise des durées d'impulsions de l'ordre de quelques picosecondes à quelques dizaines ou centaines de picosecondes.

Avantageusement, on programme les moyens de pilotage de façon à créer de l'avance sur le balancier par la répétition d'opérations de micro-gravure sur de telles zones, de façon à atteindre une valeur de fréquence de consigne qui peut être contrôlée par les moyens de mesure ou de comparaison, et de façon à générer des opérations de micro-gravure sur ces zones dans le respect de l'équilibrage de l'ensemble balancier-spiral par rapport à son axe principal d'inertie, relativement à une valeur de consigne qui peut être contrôlée par les moyens de mesure ou de comparaison, et on programme les moyens de pilotage de façon à créer du retard en modifiant la raideur du ressort-spiral, sans modification de sa structure cristalline ni de son coefficient thermique, par une microgravure effectuée sous l'action d'au moins une séquence d'impulsions d'au moins un moyen de transformation, pour l'amincissement d'au moins une spire du ressort-spiral ou/et de la partie vrillée d'une partie terminale quand le ressort-spiral en comporte une.

Dans la première alternative on programme les moyens de pilotage de façon à créer de l'avance sur le balancier, par la répétition des opérations de micro-gravure sur cette ou ces zones, de façon à atteindre une valeur de fréquence de consigne qui peut être contrôlée par les moyens de mesure ou de comparaison, et de façon à générer les opérations de micro-gravure sur ces les zones dans le respect de l'équilibrage de l'ensemble balancier-spiral par rapport à son axe principal d'inertie, relativement à une valeur de consigne qui peut être contrôlée par les moyens de mesure ou de comparaison.

Dans la seconde alternative on programme les moyens de pilotage de façon à créer du retard en modifiant la raideur du ressort-spiral, sans modification de sa structure cristalline ni de son coefficient thermique, par une microgravure effectuée sous l'action d'au moins une séquence d'impulsions d'au moins un picolaser, pour l'amincissement d'au moins une spire du ressort-spiral ou/et de la partie vrillée d'une partie terminale quand ce ressort-spiral en comporte une, toujours dans le respect de l'équilibrage de l'ensemble balancier-spiral par rapport à son axe principal d'inertie, relativement à une valeur de consigne qui peut être contrôlée par les moyens de mesure ou de comparaison.

Il est ainsi possible de créer du retard :

- en modifiant la raideur du ressort-spiral par amincissement d'au moins une spire de la partie spirale du ressort-spiral, ou/et
- en modifiant la raideur du ressort-spiral par amincissement d'au moins la partie vrillée d'une partie terminale quand le ressort-spiral en comporte une.

Dans un premier mode de réalisation, on dirige simultanément au moins deux faisceaux de mêmes caractéristiques en deux telles zones distantes l'une de l'autre, et radialement distantes de la même valeur de l'axe de balancier, ou par division du faisceau d'un unique picolaser, ou par synchronisation de deux picolasers recevant les mêmes instructions de la part des moyens de pilotage. La division du faisceau peut être faite par un élément optique tel que miroir, prisme semi-réfléchissant, ou similaire. De préférence on génère sur chacune de ces zones une telle série séquentielle d'impulsions identique à celle de l'autre zone. Si ce n'est pas possible, en raison de caractéristiques légèrement différentes de deux lasers par exemple, on veille à permuter les micro-usinages après la moitié de leur réalisation, de façon à équilibrer la matière réellement enlevée de part et d'autre.

Bien sûr, si l'exemple est donné ici avec deux picolasers, il est possible d'utiliser davantage de sources lasers. Toutefois, l'encombrement et l'accès à la zone de travail rendent souvent malcommode l'utilisation de plus de deux faisceaux sur le même ensemble.

Dans un mode particulier de réalisation, on dirige simultanément au moins deux faisceaux de mêmes caractéristiques en au moins deux telles zones de la serge ou de composants que porte le balancier, ou par division du faisceau d'un unique picolaser, ou par synchronisation de plusieurs picolasers recevant les mêmes instructions de la part des moyens de pilotage. Ces zones sont distantes l'une de l'autre, et de préférence radialement distantes de la même valeur de l'axe de balancier. Et on génère sur chacune de ces zones une série séquentielle d'impulsions identique à celle de l'autre zone. De façon plus générale, on peut effectuer des balayages avec une symétrie d'ordre n quelconque.

La rapidité de réponse des asservissements actuels permet, avec un seul picolaser, d'orienter son faisceau sur des zones du composant qui sont éloignées l'une de l'autre, notamment de part et d'autre de son axe principal d'inertie, ce qui permet, quand le domaine de travail est dégagé, d'aller micro-usiner en tout point, et en particulier d'effectuer des usinages toujours symétriques par rapport à l'axe principal d'inertie, de façon à ne pas créer de balourd. On peut ainsi travailler en pendulaire, de part et d'autre d'une même pièce, avec un trajet de quelques dixièmes de seconde pour passer d'une zone de micro-usinage à l'autre.

Il est encore possible, dans le cas de correction de l'avance ou du retard d'un oscillateur, de corriger d'emblée la moitié de cette avance ou de ce retard en balayant avec le picolaser une seule zone du balancier, très localisée d'un seul côté, on crée alors un balourd, qu'on élimine ensuite en effectuant un enlèvement de matière symétrique de l'autre côté du balancier, de la même façon. Dans ce mode de micro-usinage on gagne sur les trajets intermédiaires du faisceau, qui sont minimisés, et c'est particulièrement important si la valeur à corriger est grande, par exemple plusieurs dizaines de secondes par jour. De préférence, dans le cas de micro-usinage sur un ensemble oscillant, on travaille sur un nombre de périodes entières pour minimiser le balourd.

Naturellement, il est également possible de diviser le faisceau issu d'un seul picolaser avec un jeu de prismes et miroirs, afin d'obtenir deux faisceaux frappant le composant en deux zones différentes. Cette division est alors avantageusement effectuée de façon symétrique, afin de parvenir au même résultat. En fait, l'emploi d'un ou de plusieurs picolasers tient surtout à l'encombrement du domaine de travail, et à l'accessibilité aux zones à micro-usiner, qui peut se révéler restreinte quand le composant est intégré dans un ensemble monté, et il peut alors être plus facile d'utiliser simultanément plusieurs picolasers en symétrie, que de diviser le faisceau d'un picolaser unique selon un cheminement compliqué.

Pour une bonne mise en oeuvre de l'invention, on utilise les moyens de mesure ou de comparaison aux fins de mesure ou de comparaison d'inertie dynamique du composant autour d'un axe d'inertie que comporte ce composant, notamment autour de son axe principal d'inertie. De préférence on choisit son axe de pivotement confondu avec cet axe principal d'inertie. On peut également utiliser ces moyens de mesure ou de comparaison aux fins de comparaison du composant à un modèle théorique.

De façon préférée, on utilise ces moyens de mesure ou de comparaison en temps réel simultanément avec la micro-gravure réalisé par le picolaser, ou/et avec un apport de matière, ou/et avec un déplacement de matière.

De façon avantageuse et préférée, on effectue le micro-usinage sur le composant avec ce dernier assemblé dans un ensemble constitué de plusieurs éléments, par exemple un module ou un mouvement d'horlogerie.

Et notamment, on effectue le micro-usinage sur le composant avec ce dernier assemblé dans un balancier-spiral d'un mouvement de pièce d'horlogerie, ou encore on effectue ce micro-usinage sur le composant, qui peut notamment être un balancier-spiral, avec ce dernier assemblé dans un mouvement de pièce d'horlogerie.

L'invention est particulièrement efficace pour différentes pièces d'horlogerie, mobiles ou non, parmi lesquelles on peut citer, à titre d'exemples non limitatifs, puisque le procédé est universel: balancier, spiral, balancier-spiral, friction de chaussée, ou autres.

Ainsi, dans une réalisation particulière, on met en oeuvre un procédé d'ajustement de fréquence sur un spiral d'horlogerie comportant une première partie spirale, dont la spire externe est prolongée par une deuxième partie terminale pour sa jonction à un piton. Selon ce procédé, on crée du retard en modifiant la raideur de ce spiral par amincissement d'au moins la première partie spirale ou la deuxième partie terminale, sans modification de sa structure cristalline ni de son coefficient thermique, par une microgravure effectuée sous l'action d'au moins une séquence d'impulsions d'au moins un picolaser. De façon particulière, on micro-usine la partie vrillée de la deuxième partie terminale quand celle-ci comporte une telle partie vrillée. On peut encore, de la même façon, modifier la raideur du spiral par amincissement de la première partie spirale au niveau de plusieurs de ses spires. Naturellement on peut aussi procéder à l'amincissement de la première partie spirale et de la deuxième partie terminale.

Si nécessaire, au moins un masque peut être positionné pour protéger certaines surfaces du composant ou de l'ensemble assemblé, et naturellement ces surfaces peuvent aussi être prises en compte par les moyens de pilotage en tant que surfaces interdites pour les trajectoires du faisceau du picolaser.

L'invention concerne encore un dispositif de mise en oeuvre du procédé selon l'invention, comportant au moins une source picolaser, des moyens de pilotage de cette source encore agencés pour piloter le mouvement du faisceau issu de cette source, ou pour piloter le mouvement de cette source elle-même, des moyens de mesure et de comparaison, notamment d'inertie ou/et de fréquence d'oscillation, qui sont interfacés avec ces moyens de pilotage, et des moyens de préhension et d'appui d'un composant ou d'un ensemble à micro-usiner. De façon préférée, il comporte encore des moyens d'entraînement en pivotement de ce composant ou de cet ensemble, qui sont interfacés avec ces moyens de pilotage. Avantageusement, il comporte encore des moyens de division du faisceau issu du picolaser, et les moyens de pilotage sont alors agencés pour piloter chacun des faisceaux issus de la division, ou/et il comporte plusieurs sources picolaser, les moyens de pilotage étant alors agencés pour piloter chacun de leurs faisceaux.

Le choix de stratégies de micro-usinage, pour reprendre le vocabulaire propre au domaine du fraisage multi-axes à grande vitesse, au niveau du pilotage dans l'espace du faisceau du picolaser permet donc, de façon très efficace, d'effectuer un ajustement d'inertie ou/et un équilibrage de qualité avec l'obtention de balourds inférieurs à 2 microgrammes x centimètre, d'effectuer le traitement de micro-usinage dans un temps minimal de quelques secondes à quelques dizaines de secondes. Par exemple, la durée de traitement pour effectuer une correction de 50 secondes par jour n'excède pas 10 secondes. L'invention permet, encore, d'effectuer le micro-usinage selon un aspect particulier, et reconnaissable. Ce dernier avantage est utile dans la lutte contre la contrefaçon.

Les moyens de mesure et de comparaison à mettre en oeuvre ne sont pas complexes, et sont classiques. Dans le cas d'un balancier, les mesures concernent essentiellement la phase du balancier, l'amplitude, la vitesse, et la position de la serge, conjuguées aux mesures et comparaisons dynamiques d'inertie et de fréquence de l'oscillateur.

Le fait de pouvoir effectuer l'ablation pendant le fonctionnement d'un balancier-spiral permet d'avoir un feed-back immédiat du résultat de l'ablation par mesure de la fréquence.

Le choix d'un enlèvement de matière avec un composant statique est peu coûteux, il convient d'assurer une symétrie des enlèvements de matière pour les composants tournants, et donc les moyens de pilotage doivent gérer des zones de balayage symétriques et vérifier que les longueurs de sillons sont équivalentes.

L'ajustement de la fréquence d'un oscillateur est ainsi rendu possible par enlèvement de matière aussi bien au niveau du balancier, de sa serge, d'un plot ou d'une masselotte ou d'une vis qu'il comporte, ou encore de tout élément participant à l'inertie, comme le ressort-spiral, pour peu que les matériaux de ces composants se prêtent à une sublimation par un picolaser. On peut effectuer facilement et rapidement des réglages de quelques secondes par jour, voire davantage. C'est d'ailleurs la raison qui a fait préférer la mise en oeuvre de picolasers plutôt que de femtolasers ou attolasers, qui sont aussi utilisables mais où l'impulsion est encore plus brève, d'un facteur 1000 à chaque fois, mais où l'enlèvement de matière est faible et est plus difficilement compatible avec un ajustement industriel. A l'inverse, l'emploi d'un laser de laboratoire ou d'un nanolaser est, en termes de propreté, moins avantageux que celui d'un picolaser. Toutefois, dans la mesure où l'enlèvement de matière par un nanolaser est très supérieur à celui d'un picolaser, sa mise en oeuvre peut avoir un intérêt industriel, à condition de récupérer les projections par des moyens de protection, écrans ou lames tournantes, ou encore par des aimants, conjugués avec un flux gazeux d'évacuation des gaz et des déchets les plus légers.

Dans la plupart des cas, sur des réalisations horlogères comme l'ajustement en fréquence ou le réglage d'inertie d'un balancier-spiral, deux passes de micro-usinage s'avèrent suffisantes, et sont réalisées en quelques secondes ou dizaines de secondes au maximum.

Une variante de mise en oeuvre du procédé selon l'invention consiste à ne pas réaliser une ablation, mais au contraire un apport de matière, seul ou en combinaison avec une ablation, ou/et avec un déplacement de matière. On comprend qu'il est, ainsi, également possible de procéder alors à des ajustements ou réglages de fréquence d'oscillation, d'inertie, ou d'équilibrage.

Un tel apport de matière, qui peut naturellement être conjugué avec une ablation de matière, notamment dans un processus itératif où l'on recherche l'ajustement optimal, peut être réalisé par un picolaser, ou similaire, ou encore à l'aide de moyens de projection de matière, tels qu'une tête de projection ou « jetting » d'un produit pesant apte à se fixer sur le mobile concerné. De façon bien maîtrisée, cette projection peut être notamment une projection d'encre ou d'un autre matériau à fixation rapide par une tête d'imprimante ou similaire. La vitesse de dépôt est très élevée, et le temps opératoire est du même ordre de grandeur que le balayage laser évoqué plus haut pour le micro-enlèvement de matière.

D'autres moyens d'apport de matière sont envisageables, comme des bumps de contact, ou des traitements de type PVD directionnel ou LEPVD, soudure, brasage, refusion, implantations d'ions, ou similaires.

Un dispositif agencé pour un apport de matière, non représenté sur les figures, peut notamment comporter des moyens de commande de pilotage trois axes pour permettre une orientation quelconque dans l'espace d'au moins une unité de projection, pour chacune des zones du mobile où l'on souhaite ajouter de la matière.

La programmation des moyens de pilotage permet de créer de l'avance sur un balancier, par la répétition des opérations de micro-gravure sur cette ou ces zones, de façon à atteindre une valeur de fréquence de consigne qui peut être contrôlée par les moyens de mesure ou de comparaison, et de façon à générer ces opérations de micro-gravure sur ces zones dans le respect de l'équilibrage du balancier par rapport à son axe principal d'inertie, relativement à une valeur de consigne qui peut être contrôlée par les moyens de mesure ou de comparaison.

On comprend que, a contrario, un ajout de matière permet de créer du retard sur le balancier. Comme il a été exposé plus haut, dans le cas d'un balancier-spiral, un enlèvement de matière sur le spiral permet aussi de créer du retard sur l'ensemble.

Il est, ainsi, possible, sur un balancier-spiral, de créer à volonté avance ou retard, soit respectivement par enlèvement ou ajout de matière sur le balancier, ou, inversement, par ajout ou enlèvement de matière sur le spiral.

En cas d'utilisation combinée de plusieurs faisceaux, il est, encore, envisageable de faire varier la répartition des puissances entre les différents faisceaux, pour agir sur l'équilibrage de balourd, sous la commande des moyens de pilotage.

Dans un mode particulier de mise en oeuvre de l'invention, afin de minimiser le temps de traitement, le point d'ablation du picolaser reste fixe, ou éventuellement se meut dans une zone restreinte. De ce fait, il est possible de procéder à l'ablation de façon ininterrompue, ce qui minimise le temps de traitement.

Cependant, dans le cas général, un balourd non négligeable est créé. Toutefois, on montre ci-dessous qu'il est possible d'annuler ce balourd à condition que l'ensemble balancier-spiral ait une amplitude bien choisie. Cette stratégie est donc caractérisée par deux éléments :

- (a) ablation en continu dans une zone d'une taille de l'ordre de la largeur annulaire de la serge de balancier, ou, selon le cas, dans une zone d'une spire ou d'une courbe terminale du ressort-spiral, et
- (b) ensemble balancier-spiral possédant une amplitude bien choisie pour minimiser le balourd.

Dans un autre mode particulier de réalisation, on déplace le faisceau d'un picolaser unique d'une telle zone à une autre telle zone en symétrie de part et d'autre d'un plan passant par l'axe de balancier, et. On choisit de préférence ce plan à égale distance des amplitudes extrêmes de la course de pivotement de l'ensemble balancier-spiral. De préférence on génère alternativement sur chacune de ces zones, vers laquelle est alors focalisé le ce faisceau, une telle série séquentielle d'impulsions identique à celle d'une autre zone la précédant ou la suivant directement dans la séquence de travail du picolaser. On choisit de préférence ce plan à égale distance des amplitudes extrêmes de la course de pivotement du balancier. Dans un mode particulier, on peut choisir ces zones en symétrie axiale par rapport à l'axe de pivotement du balancier, ou de l'ensemble balancier-spiral selon le cas.

On comprend que, dans un mode comme dans l'autre, le déplacement du faisceau par rapport à la zone est un déplacement relatif : on peut tout aussi bien faire bouger le faisceau, voire la source, l'ensemble balancier-spiral, ou, de préférence, à la fois le faisceau et l'ensemble balancier-spiral.

Dans le mode où on utilise un picolaser unique, on utilise avantageusement des moyens de stabilisation d'amplitude pour maintenir le mouvement de pivotement du composant, ou de l'ensemble balancier-spiral, dans une oscillation à amplitude constante pendant le déroulement de chaque série séquentielle d'impulsions. On stabilise cette amplitude à un angle d'une valeur de 137° ou de 316,5°. On peut, encore, utiliser des moyens de synchronisation pour synchroniser le mouvement du faisceau du picolaser au mouvement de pivotement de l'ensemble balancier-spiral pendant le déroulement de chaque série séquentielle d'impulsions. Là encore, on stabilise l'amplitude à un angle d'une valeur de 137° ou de 316,5°.

De façon préférée, pour une meilleure efficacité, on définit cette au moins une zone uniquement constituée de surfaces qui sont constituées par des surfaces métalliques, d'une part au niveau du balancier ou de composants ou masselottes ou plots ou vis réglantes que porte ce balancier, ou d'autre part au niveau d'une partie spirale ou d'une courbe terminale du ressort-spiral. En l'absence de telle surfaces métalliques permettant de corriger l'avance ou le retard si nécessaire, on met en oeuvre un second processus par lequel on modifie le réglage de balourd d'équilibrage de façon à recréer une capacité de correction, selon le cas, sur le balancier ou/et sur le ressort-spiral. Ce second processus peut être un second processus itératif, et par lequel on reprend le premier processus itératif, jusqu'à obtention de la fréquence d'oscillation de consigne dans sa tolérance.

Dans une variante particulière de mise en oeuvre du procédé, on asservit les moyens de pilotage aux moyens de mesure ou de comparaison.

De préférence, avant le démarrage du procédé, on effectue un équilibrage statique et dynamique préalable de l'ensemble balancier-spiral, pour faire coïncider son axe principal d'inertie avec l'axe de balancier, et pour atteindre une valeur de consigne d'inertie dans une tolérance donnée.

La stratégie d'ablation sur un ensemble balancier-spiral en mouvement, c'est-à-dire dans son mouvement de pivotement autour de l'axe du balancier, est précisée par le calcul qui suit.

L'invention se propose, grâce à la mise en oeuvre d'un procédé nouveau, d'effectuer l'ajustement en fréquence de cet ensemble balancier-spiral, mais aussi de permettre son ajustement en inertie et en équilibrage, afin de faire coïncider cet axe de pivotement de balancier avec son axe principal d'inertie.

La présente invention est développée pour être mise en oeuvre aussi bien au niveau d'un balancier seul, que d'un balancier-spiral assemblé, que d'un balancier-spiral intégré et monté dans un mouvement d'une pièce d'horlogerie.

Cette stratégie a pour effet d'optimiser le temps de traitement et le balourd créé.

La méthode de stabilisation d'amplitude exposée ci-après s'applique aussi bien à un composant mobile isolé tel qu'un balancier, qu'à un ensemble tel qu'un ensemble balancier-spiral, ou autre.

Comme il sera détaillé ci-dessous, on stabilise alors cette amplitude de préférence à un angle d'une valeur de 137° ou de 316,5°.

Pour stabiliser l'amplitude, différentes méthodes sont utilisables, seules ou en combinaison : choix d'un état d'armage particulier du barillet, asservissement d'amplitude en boucle fermée en réglant une source de couple externe sur la tige ou sur un des mobiles du mouvement tel qu'aiguille de seconde ou de minute ou autre, utilisation d'une source extérieur de stabilisation comme un souffle d'air en oscillation libre ancre enlevée, ou autre.

Dans le cas où on utilise un picolaser unique, on peut aussi utiliser des moyens de synchronisation pour synchroniser le mouvement d'au moins un faisceau issu du picolaser au mouvement de pivotement de l'ensemble balancier-spiral pendant le déroulement de chaque dite série séquentielle d'impulsions.

Pour synchroniser, il s'agit d'estimer la phase de l'oscillation du balancier, ou de l'ensemble balancier-spiral selon le cas, ce qui est possible par différentes méthodes, seules ou en combinaison : méthode acoustique par captation par microphone des bruits produits par l'échappement, méthode optique par détection de bras du balancier ou de la rugosité des bras, pour déterminer position, vitesse et accélération de la serge, ou tout autre méthode.

On détaille maintenant comment sont déterminées les amplitudes qui permettent de minimiser, voire d'annuler, le balourd.

Comme le point d'ablation ne change pas pendant que l'ensemble balancier-spiral se meut, l'enlèvement de matière se répartit le long de la serge, pas nécessairement sur tout le périmètre, selon l'amplitude de l'ensemble balancier-spiral, ou se répartit le long d'une spire. Pour simplifier on assimile ici à la serge les éléments qu'elle est susceptible de porter, comme masselottes, plots, vis d'équilibrage ou/et de réglage. De même, on assimile à une spire du ressort-spiral les éléments rapportés que peut comporter ce ressort-spiral, comme courbe terminale, virole, ou autre. De plus, comme l'ablation se fait de préférence à fréquence de tir constante, mais que la vitesse de l'ensemble balancier-spiral varie, la quantité de matière enlevée, à une position angulaire θ du balancier, varie également. Notre objectif est de trouver une amplitude d'oscillation de l'ensemble balancier-spiral qui annule le balourd, ou, de façon équivalente, conduit à un centre de masse de la matière enlevée se situant au centre de l'ensemble balancier-spiral.

La position Xcm du centre de masse de la matière enlevée est donnée par :

$$\vec{x}_{cm} = \frac{\int \vec{x}\,dm}{\int dm},$$

l'intégration se faisant le long de la serge. Appelons f la fonction de θ qui donne la distribution linéique (le long de la serge ou de la spire, selon le cas) de matière enlevée. Pour que le balourd créé par la matière enlevée soit nul il faut donc que :

$$\int \vec{x}\,dm = \int \vec{x}\,f(\theta)\,d\theta = 0.$$

Le fait de ne considérer que des grandeurs linéiques vient de ce que l'on peut négliger la largeur de la zone de travail du picolaser par rapport à la taille de l'ensemble balancier-spiral, ainsi que la composante du balourd selon l'axe de pivotement, et ceci bien que le fait que f varie en fonction de θ résulte en une profondeur d'ablation non constante.

Considérons pour le moment uniquement le premier quart d'une seule période. La quantité dm de matière enlevée sur un intervalle dθ autour de θ, l'a été durant un certain temps dt, et l'on a également

$$dm = k\,dt,$$

où k est le taux d'enlèvement de la matière. La fréquence de tir du picolaser étant de préférence constante et très élevée par rapport à la fréquence d'oscillation du balancier, on peut considérer que k est constant. On a donc

$$k\,dt = f(\theta)\,d\theta.$$

Mais θ = A(t), où A est la fonction qui donne la position angulaire du balancier au temps t, et donc dθ = $\dot{A}$(t) dt, ce qui implique que

$$f(\theta) = \frac{k}{\dot{A}(t)} = \frac{k}{\dot{A}(A^{-1}(\theta))}.$$

En d'autres termes, la distribution de matière enlevée à la position θ de la serge est inversement proportionnelle à la vitesse de l'ensemble balancier-spiral quand son extension angulaire vaut θ.

Pour un temps de traitement de l'ordre de la seconde ou de la dizaine de secondes, l'oscillation de l'ensemble balancier-spiral est bien décrite par une évolution harmonique,

$$A(t) = A_0 \sin(\omega t).$$

Ainsi, en explicitant la dernière expression pour f, on trouve

$$f(\theta) = \frac{k}{A_0\omega\cos(\arcsin(\theta/A_0))}$$

ce qui s'écrit finalement

$$f(\theta) = \frac{k}{A_0\omega\sqrt{1 - (\theta/A_0)^2}}$$

Cette expression n'a pas de sens quand $\theta$ > Ao, mais on convient que, pour les valeurs de $\theta$ plus grandes que $A_0$, f vaut zéro, ce qui est normal, puisque le picolaser ne parvient pas à ces positions.

Pour arriver à ce résultat, nous nous sommes restreints à un quart d'oscillation de l'ensemble balancier-spiral.

L'expression finale pour f correspondant à une période complète s'obtient de celle valable pour le quart de période par symétrie. Toutefois, il n'est pas réellement nécessaire de les inclure effectivement. En outre, chaque période complète en plus n'augmente pas le balourd.

Pour comprendre pourquoi on peut se limiter au premier quart de période pour notre calcul, appelons Ox l'axe qui joint l'axe du balancier au point de travail du picolaser, et Oy l'axe perpendiculaire à Ox. En ajoutant la deuxième moitié de période à f, on ne change pas la coordonnée Xcm du centre de masse de la matière enlevée, et l'on s'assure que la coordonnée y sera nulle, par symétrie. En ajoutant le deuxième quart de période à f, on ne fait que multiplier f par deux, ce qui ne modifie en rien la condition pour que Xcm = 0. En conséquence, on étudie Xcm en fonction de f défini par l'équation (1). On a :

$$x_{cm} = \int_0^\pi \frac{\cos(\theta)\,k}{A_0\omega\sqrt{1 - (\theta/A_0)^2}}\,\mathrm{d}\theta. \qquad (2)$$

Il s'agit enfin de déterminer les valeurs de déterminer les valeurs de $A_0$ qui annulent Xcm. Comme il n'existe pas de primitive permettant d'obtenir une solution de forme fermée de l'intégrale en jeu, on obtient les zéros du membre de droite de l'équation (2) ci-dessus de façon approchée, par intégration numérique.

Un graphe du membre de droite de l'équation (2) en fonction de $A_0$ est donné sur la figure 1, où est représentée en ordonnée, la valeur algébrique de la position du centre de masse Xcm de la matière enlevée, en fonction de l'amplitude $A_0$ de la position angulaire.

On voit que, pour des valeurs de l'amplitude entre 0° et 360°, il existe deux amplitudes qui donnent un balourd nul, soit $A_0$ = 137° et $A_0$ = 316°.

De préférence, on applique à ces valeurs une tolérance de plus ou moins 2,5° par microgramme x centimètre de balourd, soit par exemple plus ou moins 5° pour un balourd de 2 microgrammes x centimètre.

Dans la pratique, il n'est pas nécessaire que le picolaser reste absolument immobile. On peut par exemple lui faire faire un mouvement de va-et-vient radial, tout en restant sur la serge ou sur la spire selon le cas. On peut aussi lui faire suivre différentes figures, comme par exemple un cercle, un huit, un polygone. Mais pour autant que la zone balayée par le picolaser ait une extension typique de l'ordre de l'épaisseur de la serge ou de la largeur de la spire, le modèle théorique ci-dessus reste une excellente approximation, et ses conclusions restent valides.

Dans le raisonnement ci-dessus, nous n'avons pas considéré l'effet d'un déphasage. Sa contribution au balourd est toutefois négligeable, car chaque oscillation complète de l'ensemble balancier-spiral produit un balourd nul, donc le balourd associé au déphasage se monte au plus au balourd maximum créé durant une seule période incomplète.

Le calcul concret présenté ci-dessus a été mené quand l'évolution du mouvement de l'ensemble balancier-spiral possède une amplitude inférieure à 360°. Toutefois, rien n'impose de se limiter à ce cas. Par exemple, si un balancier ou un ensemble balancier-spiral devait avoir une amplitude supérieure à 360°, la fonction $A^{-1}(\theta)$ aurait alors plusieurs solutions, même sur un quart de période, ce qui complique l'écriture des expressions, sans toutefois changer le raisonnement qui les sous-tend.

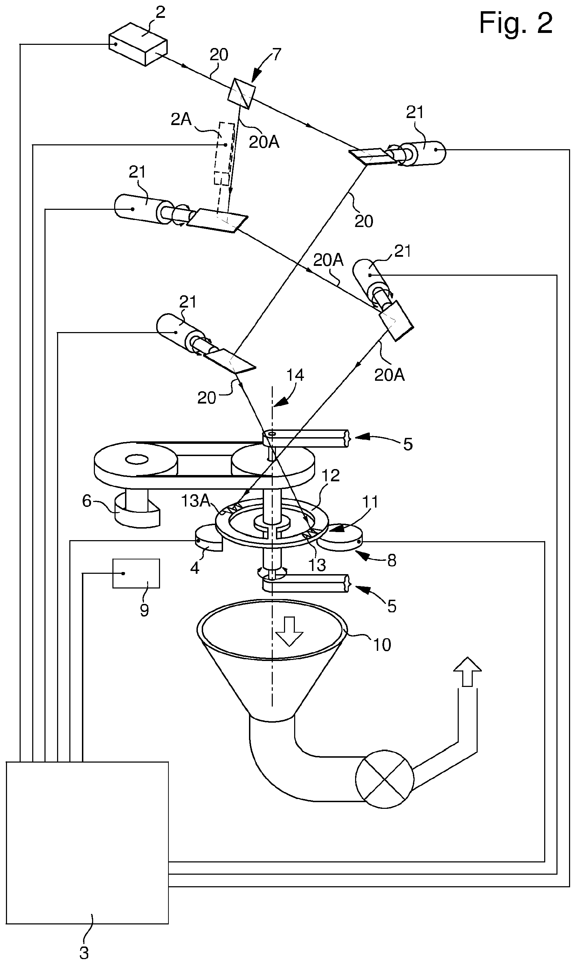

L'invention concerne encore, tel que visible sur la figure 2, un dispositif 1 de mise en oeuvre du procédé, qui comporte au moins une source picolaser 2 et des moyens de pilotage 3 de cette source agencés pour générer, séquencer, interrompre au moins une série séquentielle d'impulsions du picolaser 2. Ces moyens de pilotage 3 sont encore agencés pour piloter les mouvements d'au moins un faisceau 20 issu du picolaser 2 ou le mouvement de cette source 2 elle-même. Le dispositif 1 comporte encore des moyens de mesure et de comparaison 4 interfacés ou raccordés avec ces moyens de pilotage 3, et des moyens de préhension et d'appui 5 d'un balancier 11 ou un ensemble balancier-spiral 11 à micro-usiner, ou analogue. Les figures simplifiées 1 et 3 à 5, pour simplifier, ne représentent, de cet ensemble balancier-spiral 11, que son balancier 11, sa serge 12, et son axe de pivotement 14.

Préférentiellement, ce dispositif 1 comporte encore des moyens d'entraînement en pivotement 6 d'un ensemble balancier-spiral 11 à micro-usiner, qui sont interfacés avec ces moyens de pilotage 3. Dans une autre variante, il est également possible de mettre en oeuvre le procédé de l'invention avec un balancier ou un ensemble balancier-spiral en oscillation libre, le dispositif 1 comporte alors des moyens d'impulsion pour sa mise initiale en oscillation.

Dans un premier mode de réalisation, tel que visible sur la figure 2, le dispositif 1 comporte des moyens de division 7 du faisceau issu du picolaser 2. Les moyens de pilotage 3 sont agencés pour piloter chacun des faisceaux 20, 20A, issus de la division. Le dispositif 1 peut aussi comporter, en alternative ou en complément, tel que visible sur la figure 3, plusieurs sources picolaser 2, 2A, les moyens de pilotage 3 sont alors agencés pour piloter chacun de leurs faisceaux 20, 20A vers des zones de micro-usinage 13, 13A définies par les moyens de pilotage 3.

La figure 2 donne un exemple de pilotage de faisceaux 20 et 20A issus de la division et dont la trajectoire dans l'espace est définie par l'orientation de miroirs ou de prismes motorisés 21, de préférence à un ou deux degrés de liberté en pivotement, qui sont pilotés par les moyens de pilotage 3. De tels miroirs ou prismes 21 peuvent aussi être incorporés dans un galvanomètre, ou être réalisés de toute façon connue dans la technique générale des lasers de puissance.

Avantageusement le dispositif 1 comporte des moyens de stabilisation d'amplitude 8 pour maintenir le mouvement de pivotement de l'ensemble balancier-spiral 11 à micro-usiner dans une oscillation à amplitude constante.

Avantageusement le dispositif 1 comporte des moyens de synchronisation 9, de préférence débrayables, pour synchroniser le mouvement d'au moins un faisceau 20 issu du picolaser 2 au mouvement de pivotement de l'ensemble balancier-spiral 11 pendant le déroulement de chaque série séquentielle d'impulsions.

De façon préférée et avantageuse pour canaliser toute pollution ainsi que pour laisser le domaine de travail parfaitement propre, le dispositif 1 comporte des moyens d'évacuation 10 des gaz ou/et déchets liés à la sublimation, ces moyens d'évacuation fonctionnant notamment par différence de pression. Ces moyens d'évacuation ont pour double fonction, d'une part d'éloigner les gaz issus de la sublimation du domaine de travail, et d'autre part de protéger les opérateurs dans le cas où 'ces gaz peuvent présenter une toxicité.

Dans une variante de l'invention faisant appel à l'utilisation de masselottes, celles-ci sont avantageusement conçues de façon à permettre un réglage de la marche, notamment au niveau du service après-vente, mais aussi au niveau du réglage initial en usine.

Une première variante de configuration est l'utilisation de masselottes identiques, mais positionnées sur des diamètres différents.

Une deuxième variante de configuration est l'utilisation de masselottes différentes, notamment d'épaisseurs différentes, mais positionnées sur le même diamètre. La différence d'épaisseur peut provenir d'une préfabrication, ou encore d'ablation de matière sur l'épaisseur de la masselotte par picolaser.

Naturellement la combinaison de ces deux variantes de masselottes est également possible.

Avantageusement, ces masselottes sont réalisées dans une forme qui permet l'utilisation d'outils standard en service après-vente, notamment de type « Bergeon » ou similaire.

Une variante de l'invention permet d'éviter, ou du moins de minimiser, l'enlèvement ou l'ajout de matière, de façon à réaliser l'ajustement ou le réglage en fréquence d'oscillation, ou/et inertie, ou/et équilibrage, d'un composant mobile de mouvement d'horlogerie, ou d'un balancier d'horlogerie comportant une serge périphérique et mobile en pivotement autour d'un axe de balancier, ou d'un ensemble balancier-spiral. Il s'agit, dans cette variante, d'effectuer un déplacement de matière au sein du mobile, par fusion localisée, suivie d'un déplacement de la zone en fusion, suivie d'un refroidissement de solidification. Ceci permet de minimiser, voire d'éviter, l'enlèvement ou l'ajout de matière.

Le déplacement de matière en fusion peut être réalisé par gravité, ou sous l'action de la force centrifuge, pendant le réglage de la marche, ou encore, dans une variante avantageuse, sous l'effet d'une force d'attraction, notamment de type magnétique ou/et électrostatique si le matériau le permet.

Le déplacement de matière peut aussi être lié aux contraintes internes créées ou relâchées lors d'un traitement thermique.

Le déplacement de matière peut aussi être réalisé par pliage d'une zone déformable prévue à cet effet, telle qu'ailette ou goupille ou similaire.

Le déplacement de matière peut encore être réalisé par étalement du matériau : le choix de certains matériaux qui se « tartinent » facilement, comme l'indium, ou de certaines matières plastiques, peut faciliter grandement un tel déplacement de matière. Cet étalement peut être réalisé avec une molette, un burin, un crochet, ou analogue, en poussant ou/et tirant la matière, à l'arrêt ou/et pendant le pivotement.

Cette fusion localisée peut être effectuée par technologie laser, nanopicolaser tel qu'exposé ci-dessus, ou plasma, ou similaire.

La conception du mobile peut avantageusement être orientée pour faciliter l'ablation, le dépôt ou le déplacement de matière.

Ainsi, l'invention concerne également un ensemble balancier-spiral d'horlogerie sans raquetterie agencé pour la mise en oeuvre du procédé décrit ici pour l'ajustement de sa fréquence d'oscillation, caractérisé en ce qu'il comporte, ou une pluralité de masselottes réalisées dans une forme qui permet l'utilisation d'outils standard en service après-vente et configurées, soit identiques et positionnées sur le même diamètre ou sur des diamètres différents, soit différentes et positionnées sur le même diamètre ou sur des diamètres différents, ou une ou plusieurs chambres internes fermées propres au déplacement et au repositionnement de matière en fusion, ou une couche superficielle ou des parties sacrificielles, ou des zones à pré-contrainte relâchables sous l'application d'une force externe, ou des zones aptes à occuper des états physiques différents sous l'effet d'un traitement thermique, ou des zones électrisées ou/et magnétisées, ou des zones polymétalliques à répartition de contraintes variable.

Notamment, dans une réalisation avantageuse, le mobile comporte une couche superficielle, qui peut être de nature différente de sa structure à coeur, et qui possède des propriétés physiques rendant plus faciles ces opérations d'ablation, dépôt, transformation ou déformation. La structure de cette couche superficielle, qui peut être sacrificielle, est avantageusement choisie pour permettre l'utilisation de moyens plus simples ou plus rapides, pour réaliser les opérations souhaitées. Notamment dans le cas d'ablation laser, le choix adéquat de la couche superficielle peut permettre, ou d'utiliser un nano- ou un femto-laser à la place du picolaser plus particulièrement recommandé pour l'attaque directe de la matière de la structure du mobile. Cette couche superficielle permet, en outre, de donner un aspect particulier au composant mobile concerné.

Dans une réalisation particulière, le mobile comporte une ou plusieurs chambres internes, communicantes ou non, dans lesquelles on réalise une fusion de matière, un déplacement de cette matière en fusion, puis une solidification. La matière soumise à fusion peut très bien être d'une nature différente de la matière de la structure du mobile, par exemple la chambre peut contenir un produit fusible à température de fusion inférieure à celle de la structure dans laquelle est ménagée la chambre, par exemple un balancier en laiton peut comporter une chambre ou un canal où a été déposé de l'étain en fusion au stade de la fabrication, la refusion de cet étain et son déplacement centrifuge ou centripète permet de modifier l'inertie du mobile.

La création de chambres fermées au sein du mobile, par exemple au sein d'un balancier, permet un ajustement invisible, et permet de constituer un témoin anti-contrefaçon.

Une autre variante consiste à déformer la surface du mobile, par procédé mécanique par exemple, tel que moletage, rainurage, repoussage, poinçonnage, création de bavure ou de cratère, ou similaire, de façon à modifier localement son inertie.

La géométrie du mobile peut être conçue pour un aplatissement lors d'une chauffe ou d'une action mécanique, par exemple la serge d'un balancier peut comporter des bosses destinées à être aplaties par fusion ou par l'application d'un effort.

Une autre variante encore consiste à concevoir le mobile, dont on veut effectuer un réglage ou un ajustement de marche, équipé de parties sacrificielles amovible ou/et pliables. Cette disposition permet l'ajustement d'inertie, ainsi que l'ajustement du couple sur un spiral, et autorise aussi un relâchement de contraintes résiduelles.

De façon particulière, on peut réserver certaines zones du mobile, pour recevoir les opérations d'ablation, de dépôt de matière, de transformation ou de déformation, par exemple au niveau d'oreilles périphériques ou similaire.

Plus particulièrement dans le cas d'un balancier ou d'un balancier-spiral, il est avantageux, pour des raisons d'accessibilité, d'agir en micro-usinage, en dépôt, ou déplacement de matière, sur la tranche de la serge, ainsi que sur les deux faces opposées de cette dernière.

Avantageusement, on effectue un changement localisé d'état physique du matériau constitutif du composant, ou d'au moins un composant de l'ensemble, pour modifier son inertie par modification locale de sa géométrie ou/et sa densité.

La conception du mobile peut aussi intégrer une ou plusieurs zones de pré-contraintes ou à contraintes résiduelles, relâchables sous l'action d'une force externe. Par exemple il est possible de créer des zones à tension superficielle élevée, que l'on peut relâcher lors du réglage, créant alors une géométrie légèrement modifiée.

De façon similaire, le choix, pour la réalisation du mobile, d'un matériau à mémoire de forme, comme le « Nitinol » ou similaire, permet d'obtenir une géométrie qui reprend, ou qui prend, une forme prédéfinie, lors du réglage de la marche. Le seuil de transition correspond à une température de transition, qui peut être obtenue par une chauffe locale bien maîtrisée.

L'utilisation des propriétés physiques de certains matériaux, comme les céramiques, les semi-conducteurs, les polymères, les alliages obtenus par procédé « Liga », le quartz, les matières chargées, les métaux amorphes, permet aussi d'utiliser des géométries différentes correspondant à différents états physiques que peuvent prendre ces matériaux. Par exemple, la transformation d'un balancier réalisé en matériau amorphe, lors du passage de sa température de transition vitreuse, se traduit par une variation localisée de densité, ce qui produit l'effet recherché.

Un tel changement local de caractéristiques peut résulter, pour certains matériaux, d'un traitement à coeur, ou encore d'un changement de phase ou de structure cristallographique.

La constitution d'un mobile sous forme d'un assemblage de plusieurs matériaux ou/et métaux possédant des propriétés physiques différentes, par exemple à la façon d'un bilame, permet aussi de modifier les répartitions de contraintes, et d'effectuer un réglage d'inertie. Notamment, dans le cas d'un balancier, la réalisation d'une serge bimétallique, ou polymétallique, permet d'atteindre ce but.

L'application du procédé selon l'invention à des opérations de réglage ou d'ajustement trouve un prolongement dans une modification de caractéristiques superficielles du mobile, qui peut dans certains cas être obtenue par utilisation des mêmes moyens: certaines zones internes du mobile sont traitées, par exemple électrisées ou magnétisées, puis recouvertes d'un revêtement superficiel. Une attaque locale de ce revêtement superficiel permet alors de révéler tout ou partie des zones traitées, ce qui peut permettre d'améliorer un réglage ou un ajustement, par un effet d'attraction ou de répulsion avec un autre élément, ce qui va permettre d'atteindre plus facilement le réglage ou l'ajustement souhaité.

La mise en oeuvre de l'invention permet de faciliter les réglages et ajustements.

Elle peut aussi permettre de s'affranchir de certaines dispositions usuelles comme le vrillage du spiral, dont le but usuel est de minimiser la dispersion de marche en mouvement par le fixage du point de comptage. En effet, la conception de l'invention permet de minimiser la dispersion de marche.

**Revendications**

1. Procédé d'ajustement de fréquence d'oscillation ou d'ajustement d'inertie, et d'équilibrage d'un ensemble balancier-spiral (11) d'horlogerie, **caractérisé en ce qu'**on effectue un enlèvement de matière ou/et un ajout de matière ou/et un déplacement de matière sur au moins un composant dudit ensemble balancier-spiral, par la mise en oeuvre d'au moins un moyen de transformation comportant au moins une source picolaser (2, 2A), pour réaliser un micro-usinage ou/et une microfusion de la matière dudit au moins un composant dudit ensemble balancier-spiral (11) ou/et une microfusion d'au moins un matériau d'apport, pour vaporiser ou/et sublimer ou/et déplacer ou/et respectivement souder au moins ledit matériau d'apport sur ledit au moins un composant dudit ensemble balancier-spiral (11), sous l'effet d'au moins une impulsion dudit moyen de transformation, et qu'on commande ladite au moins une impulsion par des moyens de pilotage (3) agencés pour générer, séquencer, interrompre toute impulsion dudit au moins un moyen de transformation, lesdits moyens de pilotage (3) étant encore agencés pour piloter les mouvements d'au moins un faisceau (20, 20A) issu dudit moyen de transformation, lesdits moyens de pilotage (3) étant asservis à des moyens de mesure ou de comparaison (4) d'inertie et de fréquence d'oscillation, et **caractérisé en ce qu'**on soumet ledit ensemble balancier-spiral (11) à un mouvement de pivotement autour de son axe principal d'inertie (14), pendant ladite au moins une série séquentielle d'impulsions dudit moyen de transformation, et **en ce qu'**on utilise lesdits moyens de mesure ou de comparaison (4) aux fins de mesure ou de comparaison d'inertie dynamique dudit composant autour dudit axe principal d'inertie (14) dudit ensemble balancier-spiral (11).

2. Procédé selon la revendication 1, **caractérisé en ce qu'**on choisit lesdits moyens de pilotage (3) encore asservis à des moyens de mesures de la phase du balancier, de l'amplitude, de la vitesse, et de la position de la serge (12) du balancier dudit balancier-spiral (11), lesdites mesures étant conjuguées aux mesures et comparaisons dynamiques d'inertie et de fréquence dudit ensemble balancier-spiral (11).

3. Procédé selon la revendication 1 ou 2, **caractérisé en ce qu'**on agence lesdits moyens de mesure ou de comparaison (4) pour effectuer des mesures sur ledit au moins un composant dudit ensemble balancier-spiral (11) lors d'un mouvement dudit ensemble balancier-spiral (11), et **en ce qu'**on exécute certaines opérations de mesure ou/et de comparaison pendant l'exécution de certaines opérations de micro-usinage ou de micro-apport de matière, ou de déplacement de matière.

4. Procédé selon l'une des revendications 1 à 3 **caractérisé en ce qu'**on programme lesdits moyens de pilotage (3) de façon à définir au moins une zone particulière (13, 13A) de la surface dudit au moins un composant dudit ensemble balancier-spiral (11) sur laquelle de la matière doit être enlevée ou/et ajoutée ou/et déplacée, et **en ce qu'**on programme lesdits moyens de pilotage (3) de façon à générer au moins une série séquentielle à grande fréquence moyenne d'impulsions dudit moyen de transformation de façon à générer, sur ladite zone (13, 13A), au moins une ligne d'impacts successifs d'un faisceau (20, 20A) émis par ledit au moins un moyen de transformation, **caractérisé en ce que** ladite grande fréquence moyenne d'impulsions est comprise entre 100 kHz et 500 kHz, et, **caractérisé en ce qu'**on génère un nombre d'impulsions compris entre $10^5$ et $10^{10}$.

5. Procédé selon la revendication 4, **caractérisé en ce que** au moins, au moins ou ledit composant dudit ensemble balancier-spiral (11), ou ledit ensemble balancier-spiral (11), ou la direction du faisceau (20, 20A) dudit moyen de transformation est en mouvement pendant ladite au moins une série séquentielle d'impulsions, et **en ce que** on choisit ledit moyen de transformation comportant des moyens de division du faisceau (20, 20A) issu dudit picolaser (2, 2A), lesdits moyens de pilotage (3) étant agencés pour piloter chacun des faisceaux issus de la division, ou/et comportant plusieurs sources picolaser (2 ; 2A), lesdits moyens de pilotage (3) étant alors agencés pour piloter chacun des faisceaux (20 ; 20A) desdites sources picolaser (2, 2A).

6. Procédé selon la revendication 5, **caractérisé en ce qu'**on choisit ledit moyen de transformation comportant des moyens de division du faisceau (20, 20A) issu dudit picolaser (2, 2A), lesdits moyens de pilotage (3) étant agencés pour piloter chacun des faisceaux issus de la division, et **en ce que** lesdits moyens de pilotage (3) effectuent le pilotage de faisceaux (20, 20A) issus de la division et dont la trajectoire dans l'espace est définie par l'orientation de miroirs ou de prismes motorisés (21) à un ou deux degrés de liberté en pivotement, qui sont pilotés par lesdits moyens de pilotage (3).

7. Procédé selon l'une des revendications 4 à 6, **caractérisé en ce que** ledit composant dudit ensemble balancier-spiral (11), ou ledit ensemble balancier-spiral (11) est en mouvement pendant ladite au moins une série séquentielle d'impulsions, et **en ce que** la direction d'au moins un faisceau (20, 20A) dudit moyen de transformation est aussi en mouvement pendant ladite au moins une série séquentielle d'impulsions et est oblique par rapport à l'axe de pivotement (14) dudit composant dudit ensemble balancier-spiral (11), ou respectivement dudit ensemble balancier-spiral (11).

8. Procédé selon l'une des revendications 4 à 7, **caractérisé en ce qu'**on met en oeuvre au moins deux moyens de transformation dont les mouvements de faisceaux sont symétriques, ou par rapport à un plan passant par l'axe principal d'inertie (14) dudit composant dudit ensemble balancier-spiral (11), ou par rapport à l'axe principal d'inertie (14) dudit composant dudit ensemble balancier-spiral (11).

9. Procédé selon l'une des revendications précédentes, **caractérisé en ce qu'**on utilise un moyen de transformation unique, et qu'on utilise des moyens de stabilisation d'amplitude (8) pour maintenir le mouvement de pivotement dudit ensemble balancier-spiral (11), dans une oscillation à amplitude constante pendant le déroulement de chaque dite série séquentielle d'impulsions.

10. Procédé selon la revendication 9, **caractérisé en ce qu'**on stabilise ladite amplitude à un angle d'une valeur de 137° ou de 316,5°.

11. Procédé selon la revendication 9 ou 10, **caractérisé en ce qu'**on utilise un moyen de transformation unique, et qu'on utilise des moyens de synchronisation (9) pour synchroniser le mouvement d'au moins un faisceau (20, 20A) issu dudit moyen de transformation au mouvement de pivotement dudit composant dudit ensemble balancier-spiral (11), ou dudit ensemble balancier-spiral (11), pendant le déroulement de chaque dite série séquentielle d'impulsions.

12. Procédé selon l'une des revendications précédentes, **caractérisé en ce qu'**on effectue un déplacement de matière au sein dudit au moins un composant dudit ensemble balancier-spiral (11), ou par fusion localisée suivie d'un déplacement de la zone en fusion suivie d'un refroidissement de solidification, ou par création ou relâchement de contraintes internes lors d'un traitement thermique ou sous l'effet d'une force externe, ou par pliage d'une zone déformable ou d'une ailette ou d'une goupille, ou par un étalement du matériau.

13. Procédé selon la revendication précédente, **caractérisé en ce qu'**on effectue le déplacement de matière par fusion localisée suivie d'un déplacement de la zone en fusion suivie d'un refroidissement de solidification, le déplacement de matière en fusion étant réalisé ou par gravité, ou sous l'action de la force centrifuge pendant le réglage de la marche, ou sous l'effet d'une force d'attraction de type magnétique ou/et électrostatique.

14. Procédé selon l'une des revendications précédentes, **caractérisé en ce qu'**on effectue un changement localisé d'état physique, par passage d'une température de transition vitreuse, ou par une variation localisée de densité, ou par un changement de phase, ou par un changement de structure cristallographique, du matériau constitutif dudit au moins un composant dudit ensemble balancier-spiral (11) pour modifier son inertie par modification locale de sa géométrie ou/et sa densité.

15. Procédé selon l'une des revendications précédentes, **caractérisé en ce qu'**on effectue ledit enlèvement de matière ou/et ajout de matière ou/et déplacement de matière sur ledit au moins un composant dudit ensemble balancier-spiral (11), avec ledit au moins un composant dudit ensemble balancier-spiral (11) assemblé dans un mouvement de pièce d'horlogerie.

16. Procédé selon l'une des revendications précédentes, **caractérisé en ce qu'**on effectue ledit enlèvement de matière ou/et ajout de matière ou/et déplacement de matière sur ledit composant dudit ensemble balancier-spiral (11), avec ledit composant assemblé dans ledit balancier-spiral (11) d'un mouvement de pièce d'horlogerie.

17. Procédé selon l'une des revendications précédentes, **caractérisé en ce qu'**on choisit comme dit moyen de transformation au moins un dit picolaser (2, 2A) pour effectuer ledit enlèvement de matière par micro-gravure sous l'effet d'au moins une impulsion dudit picolaser (2, 2A) de façon à transformer directement de la matière solide dudit au moins un composant dudit ensemble balancier-spiral (11) en un flux gazeux par sublimation, et qu'on établit, de part et d'autre dudit composant pendant son traitement par ledit au moins un picolaser, une différence de pression de façon à évacuer les gaz ou/et déchets liés à ladite sublimation.

18. Procédé selon l'une des revendications précédentes pour l'ajustement de fréquence d'oscillation d'un dit ensemble balancier-spiral (11) d'horlogerie comportant au moins un balancier comportant une serge (12) périphérique, et au moins un ressort-spiral, attachés l'un à l'autre au niveau d'une virole, ledit ensemble balancier-spiral (11) étant mobile en pivotement autour d'un axe de balancier, **caractérisé en ce qu'**on effectue un enlèvement ou/et un ajout ou/et un déplacement de matière, pour effectuer l'ajustement en fréquence d'oscillation dudit ensemble balancier-spiral (11), et que ledit procédé comporte un premier processus selon lequel:

- on évalue l'avance ou le retard dudit ensemble balancier-spiral (11) par rapport à une fréquence d'oscillation de consigne ;
- on programme lesdits moyens de pilotage (3) de façon à définir au moins une zone particulière (13, 13A) sur laquelle de la matière doit être enlevée ou/et ajoutée ou/et déplacée, ladite zone (13, 13A) étant définie au niveau de ladite serge (12) dudit balancier ou de composants ou masselottes ou plots ou vis que porte ledit balancier,
- on programme lesdits moyens de pilotage (3) de façon à générer, selon le cas, une avance par une diminution d'inertie par enlèvement de matière sur ledit balancier, ou une avance par déplacement de matière au niveau dudit balancier, ou un retard par une augmentation d'inertie par ajout de matière sur ledit balancier, ou un retard par déplacement de matière au niveau dudit balancier.

19. Procédé selon la revendication précédente, **caractérisé en ce qu'**on programme lesdits moyens de pilotage (3) de façon à créer de l'avance sur ledit balancier par la répétition d'opérations de micro-gravure sur des dites zones (13, 13A), de façon à atteindre une valeur de fréquence de consigne qui peut être contrôlée par lesdits moyens de mesure ou de comparaison (4), et de façon à générer lesdites opérations de micro-gravure sur lesdites zones (13, 13A) dans le respect de l'équilibrage dudit ensemble balancier-spiral (11) par rapport à son axe principal d'inertie (14), relativement à une valeur de consigne qui peut être contrôlée par lesdits moyens de mesure ou de comparaison (4), et **en ce qu'**on programme lesdits moyens de pilotage (3) de façon à créer du retard en modifiant la raideur dudit ressort-spiral, sans modification de sa structure cristalline ni de son coefficient thermique, par une microgravure effectuée sous l'action d'au moins une séquence d'impulsions d'au moins un dit moyen de transformation, pour l'amincissement d'au moins une spire dudit ressort-spiral ou/et de la partie vrillée d'une partie terminale quand ledit ressort-spiral en comporte une.

20. Procédé selon la revendication 18 ou 19, **caractérisé en ce que** ledit premier processus est un premier processus itératif jusqu'à l'atteinte d'une fréquence d'oscillation de consigne dans une tolérance donnée.

21. Procédé selon la revendication 19 ou 20, **caractérisé en ce qu'**on définit ladite au moins une zone (13, 13A) uniquement constituée de surfaces qui sont constituées par des surfaces métalliques, d'une part au niveau dudit balancier ou de composants ou masselottes ou plots ou vis réglantes que porte ledit balancier, ou d'autre part au niveau d'une partie spirale ou d'une courbe terminale dudit ressort-spiral, et que, en l'absence de telle surfaces métalliques permettant de corriger l'avance ou le retard si nécessaire, on met en oeuvre un second processus par lequel on modifie le réglage de balourd d'équilibrage de façon à recréer une capacité de correction, selon le cas, sur ledit balancier ou/et sur ledit ressort-spiral, et par lequel on reprend ledit premier processus, jusqu'à obtention de la fréquence d'oscillation de consigne dans sa tolérance.

22. Procédé selon l'une des revendications 18 à 21, **caractérisé en ce qu'**on effectue un équilibrage statique et dynamique préalable dudit ensemble balancier-spiral (11), pour faire coïncider son axe principal d'inertie (14) avec ledit axe de balancier, et pour atteindre une valeur de consigne d'inertie dans une tolérance donnée.

23. Procédé selon l'une des revendications précédentes, **caractérisé en ce qu'**on le met en oeuvre le procédé de l'invention avec un balancier dudit ensemble balancier-spiral (11), ou ledit ensemble balancier-spiral (11), en oscillation libre, et **en ce qu'**on utilise des moyens d'impulsion pour sa mise initiale en oscillation.

24. Ensemble balancier-spiral (11) d'horlogerie sans raquetterie agencé pour la mise en oeuvre du procédé selon l'une des revendications précédentes pour l'ajustement de sa fréquence d'oscillation, **caractérisé en ce qu'**il comporte une ou plusieurs chambres internes fermées propres au déplacement et au repositionnement de matière en fusion, ou des zones à pré-contrainte relâchables sous l'application d'une force externe, ou des zones électrisées ou/et magnétisées, ou des zones polymétalliques à répartition de contraintes variable, ou des zones aptes à occuper des états physiques différents sous l'effet d'un traitement thermique, lesdits changements d'état physique étant obtenus par passage d'une température de transition vitreuse, ou par une variation localisée de densité, ou par un changement de phase, ou par un changement de structure cristallographique, du matériau constitutif dudit au moins un composant dudit ensemble balancier-spiral (11) pour modifier son inertie par modification locale de sa géométrie ou/et sa densité.

25. Dispositif (1) de mise en oeuvre du procédé selon l'une des revendications 1 à 23, **caractérisé en ce qu'**il comporte au moins une source picolaser (2, 2A) constituant ledit moyen de transformation, des moyens de pilotage (3) de ladite source agencés pour générer, séquencer, interrompre au moins une série séquentielle d'impulsions dudit picolaser (2, 2A), lesdits moyens de pilotage (3) étant encore agencés pour piloter les mouvements d'au moins un faisceau (20, 20A) issu dudit picolaser (2, 2A) ou le mouvement de ladite source picolaser (2, 2A) elle-même, des moyens de mesure et de comparaison (4) interfacés avec lesdits moyens de pilotage (3), des moyens d'entraînement en pivotement dudit composant dudit ensemble balancier-spiral (11), ou dudit ensemble balancier-spiral (11), qui sont interfacés avec lesdits moyens de pilotage, des moyens de stabilisation d'amplitude (8) pour maintenir le mouvement de pivotement dudit composant dudit ensemble balancier-spiral (11), ou dudit ensemble balancier-spiral (11), dans une oscillation à amplitude constante.

26. Dispositif (1) selon la revendication précédente, **caractérisé en ce qu'**il comporte des moyens de synchronisation (9) pour synchroniser le mouvement d'au moins un faisceau (20) issu dudit picolaser (2, 2A) au mouvement de pivotement des moyens de stabilisation d'amplitude (8) pour maintenir le mouvement de pivotement dudit au moins un composant dudit ensemble balancier-spiral (11) pendant le déroulement de toute série séquentielle d'impulsions émise par ladite au moins une source picolaser (2, 2A).

27. Dispositif (1) selon la revendication 25 ou 26, **caractérisé en ce qu'**il comporte des moyens de division du faisceau (20, 20A) issu dudit picolaser (2, 2A), lesdits moyens de pilotage (3) étant agencés pour piloter chacun des faisceaux issus de la division, ou/et **en ce qu'**il comporte plusieurs sources picolaser (2, 2A), lesdits moyens de pilotage (3) étant alors agencés pour piloter chacun de leurs faisceaux (20, 20A).

## Patentansprüche

1. Verfahren zum Einstellen der Oszillationsfrequenz oder zum Einstellen der Trägheit und des Auswuchtens einer Unruh-Spiralfeder-Anordnung (11) für eine Uhr, **dadurch gekennzeichnet, dass** eine Materialabtragung und/oder eine Materialhinzufügung und/oder eine Materialverlagerung mindestens auf einer Komponente der Unruh-Spiralfeder-Anordnung durchgeführt wird durch den Einsatz mindestens eines Umwandlungsmittels, das mindestens eine Picolaser-Quelle (2, 2A) umfasst, um eine Mikrobearbeitung und/oder eine Mikroschmelzung des Materials der mindestens einen Komponente der Unruh-Spiralfeder-Anordnung (11) und/oder eine Mikroschmelzung mindestens eines Materialeintrags durchzuführen, um zumindest das Eintragmaterial auf der mindestens einen Komponente der Unruh-Spiralfeder-Anordnung (11) unter der Einwirkung mindestens eines Impulses des Umwandlungsmittels zu verdampfen und/oder zu sublimieren und/oder zu verlagern und/oder zu schweißen, und dass der mindestens eine Impuls durch Steuermittel (3) gesteuert wird, die dafür ausgelegt sind, jeden Impuls des mindestens einen Umwandlungsmittels zu erzeugen, seine Abfolge zu steuern und zu unterbrechen, wobei die Steuermittel (3) außerdem dafür ausgelegt sind, die Bewegungen mindestens eines von dem Umwandlungsmittel ausgegebenen Strahlenbündels (20, 20A) zu steuern, wobei die Steuermittel (3) mit Mitteln (4) zum Messen oder Vergleichen der Trägheit und der Oszillationsfrequenz geregelt werden, und **dadurch gekennzeichnet, dass** die Unruh-Spiralfeder-Anordnung (11) während der mindestens einen sequentiellen Reihe von Impulsen des Umwandlungsmittels einer Drehbewegung um ihre Hauptträgheitsachse (14) unterworfen wird und dass die Mess- und Vergleichsmittel (4) für das dynamisches Messen oder Vergleichen der Trägheit der Komponente um die Hauptträgheitsachse (14) der Unruh-Spiralfeder-Anordnung (11) verwendet werden.

2. Verfahren nach Anspruch 1, **dadurch gekennzeichnet, dass** die Steuermittel (3) so gewählt werden, dass sie außerdem mit Mitteln zum Messen der Phase der Unruh, der Amplitude, der Geschwindigkeit und der Position des Unruh-Radkranzes (12) der Unruh-Spiralfeder (11) geregelt werden, wobei die Messungen den dynamischen Messungen und Vergleichen der Trägheit und der Frequenz der Unruh-Spiralfeder-Anordnung (11) zugeordnet werden.

3. Verfahren nach Anspruch 1 oder 2, **dadurch gekennzeichnet, dass** die Mess- oder Vergleichsmittel (4) dafür ausgelegt sind, Messungen an der mindestens einen Komponente der Unruh-Spiralfeder-Anordnung (11) bei einer Bewegung der Unruh-Spiralfeder-Anordnung (11) auszuführen, und dass bestimmte Mess- und/oder Vergleichsoperationen während der Ausführung bestimmter Materialmikrobearbeitungs- oder Materialmikroeintrags- oder Materialverlagerungsoperationen ausgeführt werden.

4. Verfahren nach einem der Ansprüche 1 bis 3, **dadurch gekennzeichnet, dass** die Steuermittel (3) in einer Weise programmiert sind, dass zumindest ein bestimmter Bereich (13, 13A) der Oberfläche der mindestens einen Komponente der Unruh-Spiralfeder-Anordnung (11) definiert wird, auf der das Material abgetragen und/oder hinzugefügt und/oder verlagert werden soll, und dass die Steuermittel (3) in einer Weise programmiert sind, dass mindestens eine sequentielle Reihe mit einer hohen mittleren Impulsfrequenz des Umwandlungsmittels erzeugt wird, derart, dass auf dem Bereich (13, 13A) mindestens eine Linie aufeinander folgender Treffer des Strahlenbündels (20, 20A), das von dem mindestens einen Umwandlungsmittel ausgesendet wird, erzeugt wird, **dadurch gekennzeichnet, dass** die hohe mittlere Impulsfrequenz im Bereich von 100 kHz bis 500 kHz liegt, und **dadurch gekennzeichnet, dass** eine Anzahl von Impulsen im Bereich von $10^5$ bis $10^{10}$ erzeugt wird.

5. Verfahren nach Anspruch 4, **dadurch gekennzeichnet, dass** mindestens die Komponente der Unruh-Spiralfeder-Anordnung (11) oder die Unruh-Spiralfeder-Anordnung (11) oder die Richtung des Strahlenbündels (20, 20A) des Umwandlungsmittels während mindestens einer sequentiellen Reihe von Impulsen in Bewegung ist und dass das Umwandlungsmittel so gewählt wird, dass es Mittel zum Unterteilen des Strahlenbündels (20, 20A), das von dem Picolaser (2, 2A) ausgegeben wird, umfasst, wobei die Steuermittel (3) dafür ausgelegt sind, jedes der Strahlenbündel, die aus der Teilung hervorgehen, zu steuern, und/oder mehrere Picolaser-Quellen (2; 2A) umfasst, wobei die Steuermittel (3) dann dafür ausgelegt sind, jedes der Strahlenbündel (20; 20A) der Picolaser-Quellen (2, 2A) zu steuern.

6. Verfahren nach Anspruch 5, **dadurch gekennzeichnet, dass** das Umwandlungsmittel so gewählt wird, dass es Mittel zum Unterteilen des Strahlenbündels (20, 20A), das von dem Picolaser (2, 2A) ausgegeben wird, umfasst, wobei die Steuermittel (3) dafür ausgelegt sind, jedes der aus der Teilung hervorgehenden Strahlenbündel zu steuern, und dass die Steuermittel (3) die Steuerung der aus der Teilung hervorgehenden Strahlenbündel (20, 20A) ausführen, deren Bahn im Raum durch die Ausrichtung von motorgetriebenen Spiegeln oder Prismen (21) mit einem oder zwei Drehfreiheitsgraden, die durch die Steuermittel (3) gesteuert werden, definiert ist.

7. Verfahren nach einem der Ansprüche 4 bis 6, **dadurch gekennzeichnet, dass** die Komponente der Unruh-Spiralfeder-Anordnung (11) oder die Unruh-Spiralfeder-Anordnung (11) während der mindestens einen sequentiellen Reihe von Impulsen in Bewegung ist und dass die Richtung des mindestens einen Strahlenbündels (20, 20A) des Umwandlungsmittels während der mindestens einen sequentiellen Reihe von Impulsen ebenfalls in Bewegung ist und in Bezug auf die Drehachse (14) der Komponente der Unruh-Spiralfeder-Anordnung (11) oder entsprechend der Unruh-Spiralfeder-Anordnung (11) schräg ausgerichtet ist.

8. Verfahren nach einem der Ansprüche 4 bis 7, **dadurch gekennzeichnet, dass** mindestens zwei Umwandlungsmittel betrieben werden, bei denen die Bewegungen der Strahlenbündel entweder in Bezug auf eine Ebene, die durch die Hauptträgheitsachse (14) der Komponente der Unruh-Spiralfeder-Anordnung (11) verläuft, oder in Bezug auf die Hauptträgheitsachse (14) der Komponente der Unruh-Spiralfeder-Anordnung (11) symmetrisch sind.

9. Verfahren nach einem der vorhergehenden Ansprüche, **dadurch gekennzeichnet, dass** ein einziges Umwandlungsmittel verwendet wird und dass Amplitudenstabilisierungsmittel (8) verwendet werden, um die Drehbewegung der Unruh-Spiralfeder-Anordnung (11) bei einer Oszillation mit konstanter Amplitude während des Ablaufs jeder sequentiellen Reihe von Impulsen aufrecht zu erhalten.

10. Verfahren nach Anspruch 9, **dadurch gekennzeichnet, dass** die Amplitude auf einen Winkel mit einem Wert von 137° oder 316,5° stabilisiert wird.

11. Verfahren nach Anspruch 9 oder 10, **dadurch gekennzeichnet, dass** ein einziges Umwandlungsmittel verwendet wird und dass Synchronisationsmittel (9) verwendet werden, um die Bewegung mindestens eines Strahlenbündels (20, 20A), das von dem Umwandlungsmittel ausgegeben wird, mit der Drehbewegung der Komponente der Unruh-Spiralfeder-Anordnung (11) oder der Unruh-Spiralfeder-Anordnung (11) während des Ablaufs jeder sequentiellen Reihe von Impulsen zu synchronisieren.

12. Verfahren nach einem der vorhergehenden Ansprüche, **dadurch gekennzeichnet, dass** eine Materialverlagerung in der mindestens einen Komponente der Unruh-Spiralfeder-Anordnung (11) entweder durch räumlich begrenztes Schmelzen, gefolgt von einer Verlagerung des geschmolzenen Bereichs und gefolgt von einem Verfestigungsabkühlen oder durch Erzeugen oder Entlasten innerer Spannungen bei einer Wärmebearbeitung oder unter der Einwirkung einer äußeren Kraft oder durch Falten eines verformbaren Bereichs oder eines Flügels oder eines Stifts oder durch Materialerweiterung ausgeführt wird.

13. Verfahren nach dem vorhergehenden Anspruch, **dadurch gekennzeichnet, dass** die Materialverlagerung durch räumlich begrenztes Schmelzen, gefolgt von einer Verlagerung des geschmolzenen Bereichs und gefolgt von einem Verfestigungsabkühlen ausgeführt wird, wobei die Verlagerung von geschmolzenem Material entweder durch Schwerkraft oder unter der Einwirkung der Zentrifugalkraft während der Gangregulierung oder unter der Wirkung einer Anziehungskraft des magnetischen und/oder elektrostatischen Typs ausgeführt wird.

14. Verfahren nach einem der vorhergehenden Ansprüche, **dadurch gekennzeichnet, dass** eine räumlich begrenzte Änderung des physikalischen Zustands durch Übergang von einer Glasübergangstemperatur oder durch eine räumlich begrenzte Dichteänderung oder durch eine Phasenänderung oder durch eine Änderung der Kristallstruktur des die mindestens eine Komponente der Unruh-Spiralfeder-Anordnung (11) bildenden Materials ausgeführt wird, um ihre Trägheit durch räumlich begrenzte Abwandlung ihrer Geometrie und/oder ihrer Dichte zu verändern.

15. Verfahren nach einem der vorhergehenden Ansprüche, **dadurch gekennzeichnet, dass** die Materialabtragung und/oder Materialhinzufügung und/oder Materialverlagerung an der mindestens einen Komponente der Unruh-Spiralfeder-Anordnung (11) ausgeführt wird, wobei die mindestens eine Komponente der Unruh-Spiralfeder-Anordnung (11) in einem Werk eines Zeitmessgeräts montiert ist.

16. Verfahren nach einem der vorhergehenden Ansprüche, **dadurch gekennzeichnet, dass** die Materialabtragung und/oder Materialhinzufügung und/oder Materialverlagerung an der Komponente der Unruh-Spiralfeder-Anordnung (11) ausgeführt wird, wobei die Komponente in der Unruh-Spiralfeder (11) eines Werks eines Zeitmessgeräts montiert ist.

17. Verfahren nach einem der vorhergehenden Ansprüche, **dadurch gekennzeichnet, dass** als das Umwandlungsmittel mindestens ein Picolaser (2, 2A) gewählt wird, um die Materialabtragung durch Mikroätzung unter der Wirkung mindestens eines Impulses des Picolasers (2, 2A) in einer Weise auszuführen, dass das feste Material der mindestens einen Komponente der Unruh-Spiralfeder-Anordnung (11) durch Sublimation in einen gasförmigen Strom umgewandelt wird und dass beiderseits der Komponente während ihrer Bearbeitung durch den mindestens einen Picolaser eine Druckdifferenz aufgebaut wird, um die Gase und/oder Abfälle, die mit der Sublimation in Beziehung stehen, abzuführen.

18. Verfahren nach einem der vorhergehenden Ansprüche für die Einstellung der Oszillationsfrequenz einer Unruh-Spiralfeder-Anordnung (11) für eine Uhr, umfassend mindestens eine Unruh, die einen Umfangsradkranz (12) aufweist, und mindestens eine Spiralfeder, die auf Höhe einer Spiralfederrolle aneinander befestigt sind, wobei die Unruh-Spiralfeder-Anordnung (11) um eine Unruhachse drehbar ist, **dadurch gekennzeichnet, dass** eine Abtragung und/oder Hinzufügung und/oder Verlagerung von Material durchgeführt wird, um die Einstellung der Oszillationsfrequenz der Unruh-Spiralfeder-Anordnung (11) auszuführen, und dass das Verfahren einen ersten Prozess umfasst zum:

   - Bewerten des Vorgangs oder des Nachgehens der Unruh-Spiralfeder-Anordnung (11) in Bezug auf eine Soll-Oszillationsfrequenz;
   - Programmieren der Steuermittel (3) in einer Weise, dass mindestens ein bestimmter Bereich (13, 13A) definiert wird, auf dem das Material abgetragen und/oder hinzugefügt und/oder verlagert werden soll, wobei der Bereich (13, 13A) auf Höhe des Radkranzes (12) der Unruh oder von Komponenten oder Ausgleichsgewichten oder Klötzchen oder Schrauben, die die Unruh trägt, definiert ist,
   - Programmieren der Steuermittel (3) in einer Weise, das je nach Fall ein Vorgang durch eine Verringerung der Trägheit durch Materialabtragung an der Unruh oder ein Vorgang durch Verlagerung von Material auf Höhe der Unruh oder ein Nachgehen durch Erhöhen der Trägheit durch Hinzufügung von Material an der Unruh oder ein Nachgehen durch Verlagerung von Material auf Höhe der Unruh erzeugt wird.

19. Verfahren nach dem vorhergehenden Anspruch, **dadurch gekennzeichnet, dass** die Steuermittel (3) in einer Weise programmiert sind, dass der Vorgang an der Unruh durch Wiederholen von Mikroätzungsoperationen an den Bereichen (13, 13A) erzeugt wird, derart, dass ein Sollfrequenzwert erreicht wird, der durch die Mess- oder Vergleichsmittel (4) kontrollierbar ist, und in einer Weise, dass die Operationen des Mikroätzens in den Bereichen (13, 13A) im Hinblick auf die Auswuchtung des Gleichgewichts der Unruh-Spiralfeder-Anordnung (11) in Bezug auf ihre Hauptträgheitsachse (14) relativ zu einem Sollwert erzeugt werden, der durch die Mess- oder Vergleichsmittel (4) kontrollierbar ist, und dass die Steuermittel (3) in einer Weise programmiert werden, dass das Nachgehen erzeugt wird durch Verändern des Radius der Spiralfeder ohne Veränderung weder ihrer kristallinen Struktur noch ihres Wärmekoeffizienten durch eine Mikroätzung, die unter der Einwirkung mindestens einer Folge von Impulsen des mindestens einen Umwandlungsmittels ausgeführt wird, um mindestens eine Windung der Spiralfeder und/oder des spiralförmig eingerollten Teils eines Endabschnitts, falls die Spiralfeder einen solchen enthält, zu verjüngen.

20. Verfahren nach Anspruch 18 oder 19, **dadurch gekennzeichnet, dass** der erste Prozess ein erster iterativer Prozess bis zum Erreichen einer Soll-Oszillationsfrequenz innerhalb einer gegebenen Toleranz ist.

21. Verfahren nach Anspruch 19 oder 20, **dadurch gekennzeichnet, dass** des mindestens einen Bereichs (13, 13A), der ausschließlich aus Oberflächen gebildet ist, die durch metallische Oberflächen gebildet sind, einerseits auf Höhe der Unruh oder von regulierenden Komponenten oder Ausgleichsgewichten oder Klötzchen oder Schrauben, die die Unruh trägt, oder andererseits auf Höhe eines Spiralfederabschnitts oder einer Endkrümmung der Spiralfeder definiert ist und dass bei Abwesenheit solcher metallischer Flächen, die ermöglichen, erforderlichenfalls den Vorgang oder das Nachgehen zu korrigieren, ein zweiter Prozess ausgeführt wird, durch den die Regulierung der Gleichgewichtsunwucht verändert wird, derart, dass erneut eine Korrekturkapazität je nach Fall an der Unruh und/oder an der Spiralfeder erzeugt wird, und durch den der erste Prozess wieder aufgenommen wird, bis die Soll-Oszillationsfrequenz innerhalb ihrer Toleranz erreicht ist.

22. Verfahren nach einem der Ansprüche 18 bis 21, **dadurch gekennzeichnet, dass** ein vorheriges statisches und dynamisches Auswuchten der Unruh-Spiralfeder-Anordnung (11) durchgeführt wird, damit ihre Hauptträgheitsachse (14) mit der Unruhachse zusammenfällt und damit ein Soll-Trägheitswert innerhalb einer gegebenen Toleranz erreicht wird.

23. Verfahren nach einem der vorhergehenden Ansprüche, **dadurch gekennzeichnet, dass** das Verfahren der Erfindung mit einer Unruh der Unruh-Spiralfeder-Anordnung (11) oder der Unruh-Spiralfeder-Anordnung (11) in freier Oszillation ausgeführt wird und dass Impulsmittel für die Ingangsetzung der Oszillation verwendet werden.

24. Unruh-Spiralfeder-Anordnung (11) für eine Uhr ohne Rückervorrichtung, die dafür ausgelegt ist, das Verfahren nach einem der vorhergehenden Ansprüche für die Einstellung ihrer Oszillationsfrequenz auszuführen, **dadurch gekennzeichnet, dass** sie eine oder mehrere geschlossene innere Kammern aufweist, die für die Verlagerung und die erneute Positionierung von geschmolzenem Material geeignet sind, oder Bereiche mit Vorspannung, die unter der Ausübung einer äußeren Kraft entspannbar sind, oder elektrisch geladene und/oder magnetisierte Bereiche oder multimetallische Bereiche mit veränderlicher Spannungsverteilung oder Bereiche, die geeignet sind, unter der Einwirkung einer Wärmebehandlung unterschiedliche physikalische Zustände einzunehmen, wobei die Änderungen des physikalischen Zustands erhalten werden durch Übergang von einer Glasübergangstemperatur oder durch eine räumlich begrenzte Dichteänderung oder durch eine Phasenänderung oder durch eine Änderung der Kristallstruktur des die mindestens eine Komponente der Unruh-Spiralfeder-Anordnung (11) bildenden Materials, um ihre Trägheit durch räumlich begrenzte Abwandlung ihrer Geometrie und/oder ihrer Dichte zu verändern.

25. Vorrichtung (1) für die Ausführung des Verfahrens nach einem der Ansprüche 1 bis 23, **dadurch gekennzeichnet, dass** sie mindestens umfasst: eine Picolaser-Quelle (2, 2A), die das Umwandlungsmittel bildet, Steuermittel (3) für die Quelle, die dafür ausgelegt sind, mindestens eine sequentielle Reihe von Impulsen des Picolasers (2, 2A) zu erzeugen, ihre Abfolge zu steuern und zu unterbrechen, wobei die Steuermittel (3) ferner dafür ausgelegt sind, die Bewegungen mindestens eines Strahlenbündels (20, 20A), das von dem Picolaser (2, 2A) ausgegeben wird, oder die Bewegung der Picolaser-Quelle (2, 2A) selbst zu steuern, Mess- und Vergleichsmittel (4), die mit den Steuermitteln (3) eine Schnittstelle bilden, Drehantriebsmittel der Komponente der Unruh-Spiralfeder-Anordnung (11) oder der Unruh-Spiralfeder-Anordnung (11), die mit den Steuermitteln eine Schnittstelle bilden, und Amplitudenstabilisierungsmittel (8), um die Drehbewegung der Komponente der Unruh-Spiralfeder-Anordnung (11) oder der Unruh-Spiralfeder-Anordnung (11) in einer Oszillation mit konstanter Amplitude aufrecht zu erhalten.

26. Vorrichtung (1) nach dem vorhergehenden Anspruch, **dadurch gekennzeichnet**, das sie Synchronisationsmittel (9) umfasst, um die Bewegung mindestens eines von dem Picolaser (2, 2A) ausgegebenen Strahlenbündels (20) mit der Drehbewegung der Amplitudenstabilisierungsmittel (8) zu synchronisieren, um die Drehbewegung der mindestens einen Komponente der Unruh-Spiralfeder-Anordnung (11) während des Ablaufs jeder sequentiellen Reihe von Impulsen, die von der mindestens einen Picolaser-Quelle (2, 2A) ausgesendet werden, aufrecht zu erhalten.

**27.** Vorrichtung (1) nach Anspruch 25 oder 26, **dadurch gekennzeichnet, dass** sie Mittel (20, 20A) zum Unterteilen des von dem Picolaser (2, 2A) ausgegebenen Strahlenbündels umfasst, wobei die Steuermittel (3) dafür ausgelegt sind, jedes der sich aus der Teilung ergebenden Strahlenbündel zu steuern, und/oder dass sie mehrere Picolaser-Quellen (2, 2A) umfasst, wobei die Steuermittel (3) dann dafür ausgelegt sind, jedes ihrer Strahlenbündel (20, 20A) zu steuern.

**Claims**

**1.** Method for adjusting the oscillating frequency or adjusting inertia and balancing of a timepiece spring balance assembly (11), **characterised in that** a removal of material and/or an addition of material and/or a displacement of material is/are conducted on at least one component of said spring balance assembly by using at least one transformation means comprising at least one pico-laser source (2, 2A) to conduct a micromachining and/or a microfusion operation on the material of said at least one component of said spring balance assembly (11) and/or at least a microfusion operation of at least one addition material to vaporise and/or sublimate and/or displace and/or respectively weld at least one said addition material onto said at least one component of said spring balance assembly (11) under the effect of at least one pulse of said transformation means, and that said at least one pulse is controlled by control means (3) arranged to generate, sequence, interrupt any pulse of said at least one transformation means, wherein said control means (3) are also arranged to control the movements of at least one beam (20, 20A) discharged from said transformation means, wherein said control means (3) are connected to inertia and oscillation frequency measuring or comparing means (4), and **characterised in** the said spring balance assembly (11) is caused to pivot around its main axis of inertia (14), during said at least one pulse sequence of said transformation means, and **in that** said measuring or comparing means (4) are used for the purposes of measuring or comparing said dynamic inertia of said component around the main axis of inertia (14) of said spring balance assembly (11).

**2.** Method according to claim 1, **characterised in that** said control means (3) are chosen still connected to measuring means of the phase of the balance, the amplitude, speed and the position of the rim (12) of the spring balance assembly (11) combined with the dynamic measurements and comparisons of inertia and frequency of the spring balance assembly (11).

**3.** Method according to claim 1 or 2, **characterised in that** said measuring or comparing means (4) are arranged to conduct measurements on said at least one component of said of said spring balance assembly (11) during a movement of said spring balance assembly (11), and with the execution of certain measurement and/or comparison operations during the execution of certain operations of micromachining or micro-addition of material or displacement of material.

**4.** Method according to one of claims 1 to 3, **characterised in that** said control means (3) are programmed in order to define at least one particular zone (13, 13A) of the surface of said at least one component of said spring balance assembly (11), at which the material is to be removed and/or added and/or displaced, and **in that** said control means (3) are programmed in order to generate at least one pulse sequence at high average frequency of said transformation means in order to generate over said zone (13, 13A), at least one line of successive impacts of a beam (20, 20A) emitted by said at least one transformation means, **characterised in that** said high average pulse frequency is in the range of between 100 kHz and 500 kHz, and, **characterised in that** number of pulses generated between $10^5$ and $10^{10}$.

**5.** Method according to claim 4, **characterised in that** at least, at least or said component of said spring balance assembly (11), or said spring balance assembly (11), or the direction of the beam (20, 20A) of said transformation means is moving during said at least one pulse sequence, and **in that** said transformation means are chosen comprising means for dividing the beam (20, 20A) discharged from said pico-laser (2, 2A), said control means (3) being arranged to control each of the beams resulting from the division, and/or it comprising several pico-laser sources (2; 2A), said control means (3) then being arranged to control each one of the beams (20; 20A) of said pico-laser sources (2; 2A).

**6.** Method according to claim 5, **characterised in that** said transformation means are chosen comprising means for dividing the beam (20, 20A) discharged from said pico-laser (2, 2A), said control means (3) being arranged to control each of the beams resulting from the division, and **in that** said control means (3) carrying out the controlling of the beams (20, 20A) discharged from the division and for which the spatial trajectory defined by the orientation of motor-driven mirrors or prisms (21) with one or two degrees of freedom of pivoting movement, which are controlled by the control means (3).

7. Method according to one of claims 4 to 6, **characterised in that** said component of said spring balance assembly (11), or said spring balance assembly (11) is in movement during said at least one pulse sequence, and **in that** the direction of at least one beam (20, 20A) of said transformation means is also in movement during said at least one pulse sequence and is oblique with respect to the pivot axis (14) of said component of said spring balance assembly (11), or respectively of said spring balance assembly (11).

8. Method according to one of claims 4 to 7, **characterised in that** at least two transformation means are used, the beam movements of which are symmetric either in relation to a plane passing through the main axis of inertia (14) of said component of said spring balance assembly (11), or in relation to the main axis of inertia (14) of said component of said spring balance assembly (11).

9. Method according to one of the preceding claims, **characterised in that** a single transformation means is used, and amplitude stabilising means (8) are used to maintain the pivoting movement of said spring balance assembly (11), in an oscillation at constant amplitude during the course of each pulse sequence.

10. Method according to claim 9, **characterised in that** said amplitude is stabilised at an angle with a value of 137° or 316.5°.

11. Method according to claim 9 or 10, **characterised in that** a single transformation means is used, and amplitude stabilising means (9) are used to synchronise the movement of at least one beam (20, 20A) discharged from said transformation means with the pivoting movement of said component of said spring balance assembly (11), or of said spring balance assembly (11) during the course of each pulse sequence.

12. Method according to one of the preceding claims, **characterised in that** a displacement of material within said at least one component of said spring balance assembly (11), is conducted either by localised melting followed by a displacement of the melting zone followed by solidification cooling, or by creating or relaxing internal stresses during a thermal treatment or under the effect of an external force, or by bending a deformable zone or a lug or a pin, or by spreading of the material.

13. Method according to the preceding claim, **characterised in that** the displacement of material is conducted by localised melting followed by a displacement of the melting zone followed by solidification cooling, wherein the displacement of the melting material is conducted either by gravity, or under the action of centrifugal force during adjustment of the operation, or under the effect of a magnetic and/or electrostatic attraction force.

14. Method according to one of the preceding claims, **characterised in that** a localised physical change of state by passing of a glass transition temperature, or by a local change in density, or by a change in phase, or by a change in the crystallographic structure, of the material forming said at least one component of said spring balance assembly (11) is performed to modify its inertia by local modification of its geometry and/or its density.

15. Method according to one of the preceding claims, **characterised in that** said removal of material and/or addition of material and/or displacement of material on said component or said at least one component of said spring balance assembly (11) is conducted with said at least one component of said spring balance assembly (11) assembled in a timepiece movement.

16. Method according to one of the preceding claims, **characterised in that** said removal of material and/or addition of material and/or displacement of material on said component of said spring balance assembly (11) is conducted with said component assembled in said spring balance (11) of a timepiece movement.

17. Method according to one of the preceding claims, **characterised in that** at least one pico-laser (2, 2A) is chosen as said transformation means to perform said removal of material by microengraving under the effect of at least one pulse of said pico-laser (2, 2A) in order to directly transform solid material of said at least one component of said spring balance assembly (11) into a gaseous flux by sublimation, and that a pressure difference is established on either side of said component during its treatment by said at least one pico-laser in order to evacuate the gases and/or waste materials associated with said sublimation.

18. Method according to one of the preceding claims for adjusting the oscillation frequency of a said timepiece spring balance assembly (11) comprising at least one balance comprising a peripheral rim (12) and at least one spiral spring attached to one another at a collet, wherein said spring balance assembly (11) is able to pivot around a balance axis, **characterised in that** a removal and/or an addition and/or a displacement of material is/are conducted to conduct the adjustment of the oscillation frequency of said spring balance assembly (11), and that said method comprises a first process in which:

- the gain or loss of said spring balance assembly (11) is evaluated in relation to a desired oscillation frequency;
- said control means (3) are programmed in order to define at least one particular zone (13, 13A) at which the material must be removed and/or added and/or displaced, said zone (13, 13A) is defined at said rim (12) of said balance or components or inertia blocks or studs or screws carried by said balance,
- said control means (3) are programmed in order to generate, as applicable, a gain by a reduction of inertia by removing material on said balance, or a gain by displacing material at said balance, or a loss by an increase of inertia by adding material to said balance, or a loss by displacing material at said balance.

19. Method according to the preceding claim, **characterised in that** said control means (3) are programmed in order to create gain on said balance by repeating microengraving operations on said zones (13, 13A), in order to reach a desired frequency value, which can be controlled by said measuring or comparing means (4), and in order to generate said microengraving operations on said zones (13, 13A) for the balancing of said spring balance assembly (11) in relation to its main axis of inertia (14), in relation to a desired value, which can be controlled by said measuring or comparing means (4), and said control means (3) are programmed in order to create the loss by modifying the rigidity of said spiral spring without modifying its crystalline structure or its thermal coefficient by microengraving conducted under the action of at least one pulse sequence of at least one of said transformation means to thin out at least one coil of said spiral spring and/or the twisted part of a terminal end when said spiral spring has one.

20. Method according to claim 18 or 19, **characterised in that** said first process is a first iterative process that is resumed until the desired oscillation frequency is obtained within a given tolerance.

21. Method according to claim 19 or 20, **characterised in that** said at least one zone (13, 13A) is formed solely from surfaces formed by metal surfaces, on the one hand, at the level of said balance or components or inertia blocks or studs or adjusting screws that this balance carries or, on the other hand, at the level of a spiral part or an end curve of the spiral spring, and that in the absence of such metal surfaces that allow the gain or loss to be corrected if necessary, a second process is implemented, through which the adjustment of the unbalance is adjusted to recreate a correction ability, as applicable, on said balance and/or on said spiral spring and by which said first process is resumed until the desired oscillation frequency is obtained within its tolerance.

22. Method according to claims 18 to 21, **characterised in that** an initial static and dynamic balancing of said spring balance assembly (11) is conducted to cause its main axis of inertia (14) to coincide with said balance axis and to reach a desired value of inertia within a given tolerance.

23. Method according to one of the preceding claims, **characterised in that** the method of the invention is implemented with a balance of said spring balance assembly (11), or said spring balance assembly (11), in free oscillation, and **in that** pulse methods are used for the initial setting into oscillation thereof.

24. Timepiece spring balance assembly (11) without index-assembly arranged to implement the method according to one of the preceding claims for adjusting its oscillation frequency, **characterised in that** it comprises either one or several internal chambers specifically for the displacement or repositioning of melting material, or pre-stress zones that can be relaxed under application of an external force, or electrified and/or magnetised zones, or polymetallic zones with variable stresses distribution, or zones capable of occupying different physical states under the effect of a thermal treatment, said physical changes of state obtained by passing of a glass transition temperature, or by a local change in density, or by a change in phase, or by a change in the crystallographic structure, of the material forming said at least one component of said spring balance assembly (11) is performed to modify its inertia by local modification of its geometry and/or its density.

25. Device (1) for implementing the method according to one of claims 1 to 23, **characterised in that** it comprises at least one pico-laser source (2, 2A) forming said transformation means, control means (3) of said source arranged to generate, sequence, interrupt at least one pulse sequence of said pico-laser (2, 2A), said control means (3) also being arranged to control the movements of at least one beam (20, 20A) discharged from said pico-laser (2, 2A) or the movement of said pico-laser source (2, 2A) itself, measuring and comparing means (4) interfaced with said control means (3), driving means for pivoting said component or said spring balance assembly (11), or of said spring balance assembly (11), which are interfaced with said control means, amplitude stabilising means (8) for maintaining the pivoting movement of said component or said spring balance assembly (11), or of said spring balance assembly (11), in an oscillation of constant amplitude.

26. Device (1) according to the preceding claim, **characterised in that** it comprises synchronising means (9) for synchronising the movement of at least one beam (20) discharged from said pico-laser (2, 2A) with the pivoting movement of amplitude stabilising means (8) to maintain the pivoting movement of said at least one component of said spring balance assembly (11) during the course of each pulse sequence emitted by said at least one pico-laser source (2, 2A).

27. Device (1) according to claim 25 or 26, **characterised in that** it comprises means for dividing the beam (20, 20A) discharged from said pico-laser (2, 2A), said control means (3) being arranged to control each of the beams resulting from the division, and/or it comprises several pico-laser sources (2, 2A), wherein said control means (3) are then arranged to control each of their beams (20, 20A).

Fig. 1

Fig. 3            Fig. 4            Fig. 5

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2538528 A, Kohlhagen
- DE 1142796, Hettich
- CH 367444, OMEGA
- US 3225586 A, HAMILTON
- CH 390165, Zenger
- CH 690874, Witschi
- CH 526097
- FR 2159367
- EP 1172714 A1, SEIKO
- EP 1213628 A1
- US 6534742 B